# EUROPÄISCHE PATENTSCHRIFT

(11) **EP 1 512 882 B1**
(45) Veröffentlichungstag und Bekanntmachung des Hinweises auf die Patenterteilung: **24.10.2007**
(21) Anmeldenummer: 04018885.6
(22) Anmeldetag: 10.08.2004
(51) Int. Cl.: F16D 25/08

(54) **Hydraulikzylinder**
Hydraulic cylinder
Cylindre hydraulique

(30) Priorität: 05.09.2003 DE 10341470
(43) Veröffentlichungstag der Anmeldung: 09.03.2005
(73) Patentinhaber: FTE automotive GmbH, 96106 Ebern (DE)
(72) Erfinder: Derra, Hubert, 96166 Kirchlauter (DE); Grimmer, Dieter, 97483 Eltmann (DE); Schor, Wolfgang, 96106 Ebern (DE); Müller, Robert, 96126 Maroldsweisach (DE)
(74) Vertreter: Oppermann, Mark

(56) Entgegenhaltungen:
- DE-A1- 4 331 241
- DE-A1- 10 038 012
- DE-A1- 19 516 392
- GB-A- 2 241 298
- US-A- 4 665 802
- US-A- 4 766 804

## Beschreibung

Die Erfindung bezieht sich auf einen Hydraulikzylinder gemäß dem Oberbegriff des Patentanspruchs 1. Insbesondere bezieht sich die Erfindung auf einen Nehmerzylinder für eine hydraulische Kupplungsbetätigung für Kraftfahrzeuge, wie sie massenweise in der Automobilindustrie zum Einsatz kommen.

Eine herkömmliche hydraulische Kupplungsbetätigung für Kraftfahrzeuge hat einen Geberzylinder, der an einen mit Hydraulikflüssigkeit gefüllten Ausgleichsbehälter angeschlossen ist. Der Geberzylinder weist ein Zylindergehäuse auf, in dessen Gehäusebohrung ein Kolben längsverschieblich aufgenommen ist. Der Geberzylinderkolben begrenzt in der Gehäusebohrung des Zylindergehäuses eine Druckkammer und kann mittels eines Kupplungspedals oder eines elektromotorischen Antriebs mechanisch mit einer Betätigungskraft beaufschlagt werden. Die Druckkammer des Geberzylinders ist über eine Druckleitung mit einer Druckkammer eines Nehmerzylinders hydraulisch verbunden, so daß der durch Niedertreten des Kupplungspedals oder elektromotorische Verschiebung des Geberzylinderkolbens in der Druckkammer des Geberzylinders erzeugte Druck über die Flüssigkeitssäule in der Druckleitung auf die Druckkammer des Nehmerzylinders übertragbar ist. Der Nehmerzylinder weist ebenfalls ein Zylindergehäuse mit einer Gehäusebohrung auf, in der ein die Druckkammer des Nehmerzylinders begrenzender und somit mit dem im Geberzylinder erzeugten Druck beaufschlagbarer Kolben längsverschieblich aufgenommen ist. Dem Nehmerzylinderkolben ist eine Kolbenstange zugeordnet, die an einem Kupplungshebel angreift, welcher seinerseits mit dem Ausrücklager der Kupplung in Wirkverbindung steht. Im Ergebnis kann das Ausrücklager der Kupplung über den Nehmerzylinderkolben mit einer Betätigungskraft beaufschlagt werden, um über einen Ausrückmechanismus die Kupplungsdruckplatte von der Kupplungsmitnehmerscheibe und somit den Motor vom Getriebe des Kraftfahrzeugs zu trennen.

Insbesondere im Zusammenhang mit hydraulischen Kupplungsbetätigungen, die als aus Geberzylinder, Ausgleichsbehälter, Druckleitung und Nehmerzylinder vormontierte und mit Hydraulikflüssigkeit vorbefüllte Einheit an das Montageband des Kraftfahrzeugherstellers geliefert werden, wurden im Stand der Technik bereits Maßnahmen vorgeschlagen (z.B. US 4,665,802, US 4,766,804, GB 2 241 298 A), um die Kolbenstange des Nehmerzylinders bezüglich des Zylindergehäuses des Nehmerzylinders zur Vermeidung einer Überbefüllung der hydraulischen Kupplungsbetätigung, für den Transport derselben sowie zur Vereinfachung der Montage der Einheit im Kraftfahrzeug in einer vorbestimmten Hubstellung temporär zu fesseln.

So offenbart die gattungsbildende GB 2 241 298 A einen Nehmerzylinder mit einem eine Gehäusebohrung aufweisenden Zylindergehäuse, einem in der Gehäusebohrung längsverschieblich aufgenommenen Kolben sowie einer dem Kolben zugeordneten Kolbenstange, bei welchem Nehmerzylinder ein Fixierelement vorgesehen ist, das vor einer Erstbetätigung des Nehmerzylinders lösbar mit der Kolbenstange verbunden ist und diese bezüglich des Zylindergehäuses in einer vorbestimmten Hub-, d.h. Axialstellung fixiert und welches ferner dazu ausgebildet ist, mit der Erstbetätigung des Nehmerzylinders die Kolbenstange gegenüber dem Zylindergehäuse freizugeben. Bei diesem Stand der Technik weist das Fixierelement einen Ringflanschabschnitt auf, der in einen gestuften Endabschnitt der Gehäusebohrung des Zylindergehäuses an deren offenen Ende eingesetzt und dort mittels eines Sicherungsrings festgelegt ist. Vom Ringflanschabschnitt des Fixierelements erstrecken sich mehrere dünne Befestigungsstreifen in radialer Richtung nach innen zu dem vom Kolben abgewandten Ende der Kolbenstange, wo sie einstückig in den Kolbenstangenkopf übergehen, um die Kolbenstange bezüglich des Zylindergehäuses vor einer Erstbetätigung des Nehmerzylinders in einer vorbestimmten Hubstellung zu fesseln. Wird der Nehmerzylinder zum ersten Mal betätigt, reißen die Befestigungsstreifen am Ringflanschabschnitt ab und geben die Kolbenstange frei.

Obgleich dieser Stand der Technik gegenüber früheren Lösungen (z.B. US 4,665,802, US 4,766,804), bei denen das Fixierelement eine separate, auf den Kolbenstangenkopf aufgesetzte Haltekappe hatte, die mittels Befestigungsstreifen gegenüber dem Außenumfang des Zylindergehäuses lösbar verspannt wurde, um die Kolbenstange in einer vorbestimmten Hubstellung bezüglich des Zylindergehäuses zu halten, den Vorteil aufweist, daß aufgrund der einstückigen Ausbildung von Fixierelement und Kolbenstange der Zusammenbau des Nehmerzylinders erheblich vereinfacht ist, ist der gattungsbildende Stand der Technik insbesondere in funktioneller Hinsicht noch verbesserungsbedürftig. So ist es beim gattungsbildenden Stand der Technik nicht möglich, am vom Kolben abgewandten Kopf der Kolbenstange eine ggf. gegenüber der Kolbenstange verschwenkbare Gleitpfanne oder Staubschutzkappe anzubringen, wie sie etwa aus dem Stand der Technik gemäß der DE 195 16 392 A1 oder der DE 100 38 012 A1 bekannt ist. Auch kann es im Betrieb des Nehmerzylinders dahingehend zu Problemen kommen, daß die am Kolbenstangenkopf angeformten, vom Ringflanschabschnitt des Fixierelements abgerissenen Befestigungsstreifen die Funktion des Nehmerzylinders beeinträchtigen, in dem sie z.B. eine ggf. notwendige, hubabhängige Winkelbewegung der Kolbenstange gegenüber der Mittelachse des Zylindergehäuses behindern.

Der Erfindung liegt demgegenüber die Aufgabe zugrunde, einen möglichst einfach ausgebildeten Hydraulikzylinder, insbesondere Nehmerzylinder für eine hydraulische Kupplungsbetätigung für Kraftfahrzeuge zu schaffen, bei dem die Kolbenstange gegenüber dem Zylindergehäuse vor Erstbetätigung des Hydraulikzylinders in vorbestimmter Hubstellung gefesselt ist und mit Erstbetätigung des Hydraulikzylinders freigegeben wird, ohne daß damit die oben bei Diskussion des Stands der Technik geschilderten Probleme verbunden sind.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 19.

Erfindungsgemäß ist bei einem Hydraulikzylinder, insbesondere Nehmerzylinder für eine hydraulische Kupplungsbetätigung für Kraftfahrzeuge, der ein eine Gehäusebohrung aufweisendes Zylindergehäuse, einen in der Gehäusebohrung längsverschieblich aufgenommenen Kolben, eine dem Kolben zugeordnete Kolbenstange und ein Fixierelement umfaßt, das vor einer ersten Betätigung des Hydraulikzylinders lösbar mit der Kolbenstange verbunden ist und diese bezüglich des Zylindergehäuses in einer vorbestimmten Hubstellung fixiert und das dazu ausgebildet ist, mit der ersten Betätigung des Hydraulikzylinders die Kolbenstange gegenüber dem Zylindergehäuse freizugeben, das Fixierelement vor der ersten Betätigung des Hydraulikzylinders in einer ersten Position mit einem mittleren Bereich der Kolbenstange lösbar verbunden und mit der ersten Betätigung des Hydraulikzylinders von der ersten Position in einen zweiten, kolbenstangen- oder zylindergehäusefesten Positionsbereich verlagerbar, in dem es für weitere Betätigungen des Hydraulikzylinders festlegbar ist.

Durch diese temporäre Fesselung der Kolbenstange gegenüber dem Zylindergehäuse ist es u.a. möglich, den erfindungsgemäßen Hydraulikzylinder an seinem Einsatzort im wesentlichen kraftfrei zu montieren, weil dabei eine ggf. im Hydraulikzylinder vorgesehene, dessen Kolben in Betätigungsrichtung vorspannende Feder nicht durch Hineinschieben der Kolbenstange in das Zylindergehäuse und damit Verschieben des Kolbens im Zylindergehäuse zusammengedrückt werden muß, vielmehr die Kolbenstange bezüglich des Zylindergehäuses gegen die Kraft der Vorspannfeder mittels des Fixierelements temporär in einer vorbestimmten, für die Montage günstigen Hubstellung gehalten werden kann. Andere Einsatzzwecke der Erfindung umfassen die Vermeidung einer Überbefüllung eines den erfindungsgemäßen Hydraulikzylinder aufweisenden hydraulischen Systems bei dessen Vorbefüllung, wobei das Fixierelement dafür sorgt, daß der Hydraulikzylinder vor seiner Erstbetätigung nur eine vorbestimmte Menge an Hydraulikflüssigkeit aufnehmen kann, sowie die Sicherung des erfindungsgemäßen Hydraulikzylinders gegen Transportschäden, wobei das Fixierelement beim Transport des Hydraulikzylinders ein übermäßiges Vorstehen der Kolbenstange aus dem Zylindergehäuse heraus verhindert.

Als mittlerer Bereich der Kolbenstange, mit dem das Fixierelement vor der ersten Betätigung des Hydraulikzylinders lösbar verbunden ist, soll für die Zwecke der vorliegenden Beschreibung der Bereich der Kolbenstange verstanden werden, der zwischen den Endbereichen der Kolbenstange liegt, über die die Kolbenstange mit dem Kolben bzw. dem Kupplungshebel im Falle eines Kupplungsnehmerzylinders wirkverbunden ist, also der Bereich der Kolbenstange, der nicht zu deren Endbereichen zählt, wobei die lösbare Verbindung zwischen Fixierelement und Kolbenstange den jeweiligen Erfordernissen entsprechend mittig im mittleren Bereich oder aber näher an dem einen oder dem anderen Endbereich der Kolbenstange liegen kann. Dadurch, daß das Fixierelement vor der ersten Betätigung des Hydraulikzylinders erfindungsgemäß an diesem mittleren Bereich der Kolbenstange angreift, bleibt das vom Kolben abgewandte Kolbenstangenende jedenfalls frei, so daß hier den jeweiligen Erfordernissen entsprechend bei oder vor der Montage des Hydraulikzylinders am Einsatzort eine Gleitpfanne, Staubschutzkappe od.dgl. problemlos angebracht werden kann.

Ein weiterer, wesentlicher Grundgedanke der Erfindung besteht darin, daß das Fixierelement zum Fixieren und Positionieren der Kolbenstange gegenüber dem Zylindergehäuse sich vor der ersten Betätigung des Hydraulikzylinders in einer ersten Position befindet und mit der ersten Betätigung des Hydraulikzylinders aus dieser ersten Position in einen zweiten, von der ersten Position verschiedenen Positionsbereich verlagert wird, wo das Fixierelement für weitere Betätigungen des Hydraulikzylinders festgelegt wird, also verbleibt. Somit ist es möglich, das Fixierelement mit der Erstbetätigung des Hydraulikzylinders aus einem Funktionsbereich des Hydraulikzylinders herauszubewegen, in welchem es andernfalls etwa eine Winkelbewegung der Kolbenstange bezüglich der Mittelachse des Zylindergehäuses behindern und/oder unerwünschte Reibgeräusche verursachen könnte, und darüber hinaus außerhalb dieses Funktionsbereichs festzulegen bzw. zu sichern, so daß das Fixierelement auch bei den weiteren Betätigungen des Hydraulikzylinders dessen Funktion nicht beeinträchtigen kann.

Insbesondere zur Vereinfachung des Zusammenbaus des Hydraulikzylinders kann das Fixierelement im weiteren Verfolg des Erfindungsgedankens einstückig mit der Kolbenstange ausgebildet sein. Eine solche einstückige Ausbildung von Fixierelement und Kolbenstange kann z.B. in herstellungstechnisch besonders einfacher Weise durch Spritzgießen aus Kunststoff erzielt werden. Alternativ dazu kann das Fixierelement aber auch ein von der Kolbenstange separates Teil sein. Letztere Ausgestaltung hat u.a. den Vorteil, daß Baukastenlösungen möglich sind, bei denen gleich ausgebildete Fixierelemente in verschiedenen Hydraulikzylindern mit unterschiedlichen Kolben und/oder Kolbenstangen zum Einsatz kommen können.

Vorteilhaft kann das Fixierelement ringförmig ausgebildet sein und die Kolbenstange umgeben. Bei geeigneter Dimensionierung des Fixierelements in radialer Richtung ist es somit möglich, neben der temporären Fesselung der Kolbenstange in einer vorbestimmten Hubstellung die Kolbenstange vor der ersten Betätigung des Hydraulikzylinders auch in einer vorbestimmten Winkellage bezüglich der Mittelachse der Gehäusebohrung im Zylindergehäuse zu fixieren, um die Montage des Hydraulikzylinders am Einsatzort zu erleichtern.

Die mit der ersten Betätigung des Hydraulikzylinders lösbare Verbindung zwischen dem Fixierelement und der Kolbenstange kann auf verschiedene Art und Weise ausgeführt werden. So kann in einer ersten bevorzugten Alternative die lösbare Verbindung zwischen dem Fixierelement und der Kolbenstange insbesondere stoffschlüssig über mindestens eine Sollbruchstelle zwischen dem Fixierelement und der Kolbenstange oder einem das Fixierelement in der ersten Position an der Kolbenstange haltenden Träger hergestellt sein. Diese Sollbruchstelle(n) bricht/ brechen mit der ersten Betätigung des Hydraulikzylinders, so daß die Kolbenstange ggf. zusammen mit dem Träger für das Fixierelement von dem Fixierelement freikommt.

Insbesondere in herstellungstechnischer Hinsicht vorteilhaft ist es hierbei, wenn das Fixierelement einen Außenring und eine Mehrzahl von sich vom Außenring nach radial innen erstreckenden Verbindungsstegen aufweist, die vor der ersten Betätigung des Hydraulikzylinders jeweils über eine Sollbruchstelle einteilig mit der Kolbenstange oder einem innerhalb des Außenrings vorgesehenen Tragring als Träger verbunden sind, der in der ersten Position auf einem Sitz an der Kolbenstange angeordnet ist. Bei letzterer Variante kann der Tragring konzentrisch innerhalb des Außenrings angeordnet sein. Somit wird auf einfache Weise gewährleistet, daß das Fixierelement die Kolbenstange vor der ersten Betätigung des Hydraulikzylinders in einer mit der Mittelachse der Gehäusebohrung im Zylindergehäuse im wesentlichen ausgefluchteten Lage hält, was die Montage des Hydraulikzylinders am Einsatzort erleichtert, weil die Kolbenstange nicht von Hand ausgerichtet werden muß, um z.B. im Falle eines Kupplungsnehmerzylinders das vom Kolben abgewandte Ende der Kolbenstange in eine diesem zugeordnete Aussparung am Kupplungshebel einfädeln zu können. Denkbar sind hier den jeweiligen Einbauerfordernissen entsprechend aber auch Ausgestaltungen, bei denen der Tragring mit einem Achs- und ggf. Winkelversatz zum Außenring des Fixierelements innerhalb des Außenrings angeordnet ist, um vor der ersten Betätigung des Hydraulikzylinders die Kolbenstange bezüglich der Mittelachse der Gehäusebohrung im Zylindergehäuse in einem vorbestimmten Winkel zu halten. Hierbei kann es zweckmäßig sein, wenn der Tragring drehfest bezüglich der Kolbenstange auf dem Sitz an der Kolbenstange angeordnet ist.

Zur Ausbildung der oben angesprochenen Sollbruchstellen wäre grundsätzlich etwa eine Klebeverbindung mit definierter Haftkraft zwischen den Verbindungsstegen und der Kolbenstange bzw. dem Tragring denkbar. Bevorzugt, weil einfacher und kostengünstiger herzustellen, ist jedoch eine Ausgestaltung der Sollbruchstellen, bei der die Sollbruchstellen jeweils stoffschlüssig durch eine Querschnittsverjüngung des jeweiligen Verbindungsstegs zwischen dem Außenring und der Kolbenstange oder dem Tragring ausgebildet sind.

Als Alternative zu einer lösbaren, insbesondere stoffschlüssigen Verbindung zwischen dem Fixierelement und der Kolbenstange mittels Sollbruchstellen kann die lösbare Verbindung zwischen dem Fixierelement und der Kolbenstange insbesondere den jeweiligen Materialerfordernissen entsprechend auch formschlüssig mittels komplementär ineinandergreifender Strukturen am Fixierelement und an der Kolbenstange hergestellt sein, mit einer federnden Ausbildung von Fixierelement und/oder Kolbenstange derart, daß bei Aufbringung einer Kraft, die in Achsrichtung der Kolbenstange wirkt und eine vorbestimmte Kraft überschreitet, die Strukturen unter einer radialen Ausweichbewegung von Fixierelement und/oder Kolbenstange außer Eingriff kommen. Hierbei kann in einer einfachen Ausgestaltung die Kolbenstange in ihrem mittleren Bereich mit einer Radialnut versehen sein, die einen halbrunden Querschnitt aufweist und in die vor der ersten Betätigung des Hydraulikzylinders ein komplementär geformter Ringabschnitt des Fixierelements formschlüssig eingreift, wobei das Fixierelement einen in Längsrichtung durchgehenden Schlitz hat, um nach radial außen auffedern zu können. Somit kann die Kolbenstange auch bis auf die zusätzliche Radialnut in ihrem mittleren Bereich gegenüber bewährten herkömmlichen Kolbenstangen in vorteilhafter Weise unverändert bleiben.

Es ist ferner zweckmäßig, wenn das Fixierelement in seiner ersten Position an einer Widerlagerfläche anliegt, die an einem von der Kolbenstange durchgriffenen, offenen Ende der Gehäusebohrung an einem Ringbund des Zylindergehäuses oder einem dort angebrachten Einsatzteil ausgebildet ist.

Wenn sich des weiteren der zweite, kolbenstangenfeste Positionsbereich für das Fixierelement zwischen dessen erster Position an der Kolbenstange und dem Kolben nahe dem Kolben befindet, ergibt sich in vorteilhafter Weise eine besonders große Winkelbeweglichkeit der Kolbenstange in der Gehäusebohrung des Zylindergehäuses, ohne daß die Winkelbewegung der Kolbenstange durch das in seiner zweiten Position festgelegte Fixierelement behindert wird. Als Alternative dazu kann, etwa wenn eine besonders große Winkelbeweglichkeit der Kolbenstange nicht erforderlich oder nicht erwünscht ist, sich der zweite, zylindergehäusefeste Positionsbereich für das Fixierelement an einem von der Kolbenstange durchgriffenen, offenen Ende der Gehäusebohrung im Zylindergehäuse befinden.

Im weiteren Verfolg des Erfindungsgedankens kann im zweiten, kolbenstangen- oder zylindergehäusefesten Positionsbereich für das Fixierelement eine Struktur ausgebildet sein, mit der eine ggf. dazu komplementär geformte Struktur am Fixierelement formschlüssig in Eingriff bringbar ist, um das Fixierelement für weitere Betätigungen des Hydraulikzylinders festzulegen. Eine solche formschlüssige Festlegung des Fixierelements in dessen zweiten, kolbenstangen- oder zylindergehäusefesten Positionsbereich läßt sich - verglichen mit etwa einer hier ebenfalls denkbaren Druckverklebung - konstruktiv mit vorteilhaft geringem Aufwand umsetzen.

So kann in einer ersten bevorzugten Alternative für eine mit der ersten Betätigung des Hydraulikzylinders einhergehende, formschlüssige Festlegung des Fixierelements an der Kolbenstange im zweiten, kolbenstangenfesten Positionsbereich für das Fixierelement eine Mehrzahl von Rastnasen vorgesehen sein, mit denen sich von einem Außenring des Fixierelements nach radial innen erstreckende Verbindungsstege des Fixierelements verrastbar sind, welche hierfür in axialer Richtung des Fixierelements federnd ausgebildet sind. Derartige Rastnasen lassen sich auf einfache Weise ausbilden, wenn die Kolbenstange aus Kunststoff spritzgegossen wird. Anstelle oder in Ergänzung zu einer federnden Ausbildung der Verbindungsstege des Fixierelements könnte hier grundsätzlich aber auch der Außenring des Fixierelements mit einem in dessen Längsrichtung durchgehenden Schlitz versehen sein oder eine netz- oder gitterartige Formgebung aufweisen, um ein radiales Auffedern des Fixierelements und damit ein Verrasten der Verbindungsstege des Fixierelements mit den Rastnasen an der Kolbenstange zu ermöglichen.

In einer zweiten vorteilhaften Alternative für eine mit der ersten Betätigung des Hydraulikzylinders einhergehende, formschlüssige Festlegung des Fixierelements an der Kolbenstange kann die Kolbenstange im zweiten, kolbenstangenfesten Positionsbereich für das Fixierelement mit einer umlaufenden Radialnut versehen sein, in die das Fixierelement einschnappbar ist, wozu das Fixierelement mit einem in dessen Längsrichtung durchgehenden Schlitz versehen ist, während die Kolbenstange wenigstens eine zum zweiten, kolbenstangenfesten Positionsbereich hin ansteigende Schräge aufweist, mittels der das Fixierelement bei der ersten Betätigung des Hydraulikzylinders zur Herstellung der Schnappverbindung radial auffederbar ist. Auch hier kann das Fixierelement anstelle des Schlitzes grundsätzlich auch eine netz- oder gitterartige Formgebung aufweisen, um ein radiales Auffedern des Fixierelements zu ermöglichen, was jedoch weniger bevorzugt ist, weil es einen höheren herstellungstechnischen Aufwand erfordert.

Soll der zweite Positionsbereich für das Fixierelement nicht kolbenstangen- sondern zylindergehäusefest sein, etwa um eine Mitbewegung des Fixierelements mit jeder Kolbenbewegung zu vermeiden, kann die Anordnung für eine mit der ersten Betätigung des Hydraulikzylinders einhergehende, formschlüssige Festlegung des Fixierelements am Zylindergehäuse vorteilhaft derart getroffen sein, daß das Zylindergehäuse an einem von der Kolbenstange durchgriffenen, offenen Ende der Gehäusebohrung oder ein dort angebrachtes Einsatzteil im zweiten, zylindergehäusefesten Positionsbereich für das Fixierelement mit einem Hinterschnitt versehen ist, in den eine am Fixierelement ausgebildete Rastnase einschnappbar ist, wobei das Fixierelement wiederum mit einem in dessen Längsrichtung durchgehenden Schlitz versehen ist, während zylindergehäuseseitig eine zum zweiten, zylindergehäusefesten Positionsbereich hin ansteigende Fügeschräge vorgesehen ist, über die das Fixierelement bei der ersten Betätigung des Hydraulikzylinders zur Herstellung der Schnappverbindung radial auffederbar ist.

Weiterhin kann das Fixierelement in seiner zweiten, kolbenstangen- oder zylindergehäusefesten Position als Anschlagelement dienen, welches mit einem zylindergehäuse- bzw. kolbenstangenfesten Gegenanschlag zusammenwirkt, um den Hub des Kolbens in der Gehäusebohrung des Zylindergehäuses zu begrenzen, so daß das Fixierelement in vorteilhafter Weise eine weitere Funktion erfüllt.

Wie bereits weiter oben angesprochen, ist es schließlich einer einfachen und kostengünstigen Herstellung förderlich, wenn das Fixierelement aus Kunststoff besteht, insbesondere daraus spritzgegossen wird.

Die Erfindung wird nachstehend anhand bevorzugter Ausführungsbeispiele unter Bezugnahme auf die beigefügten Zeichnungen näher erläutert. Dabei zeigen:

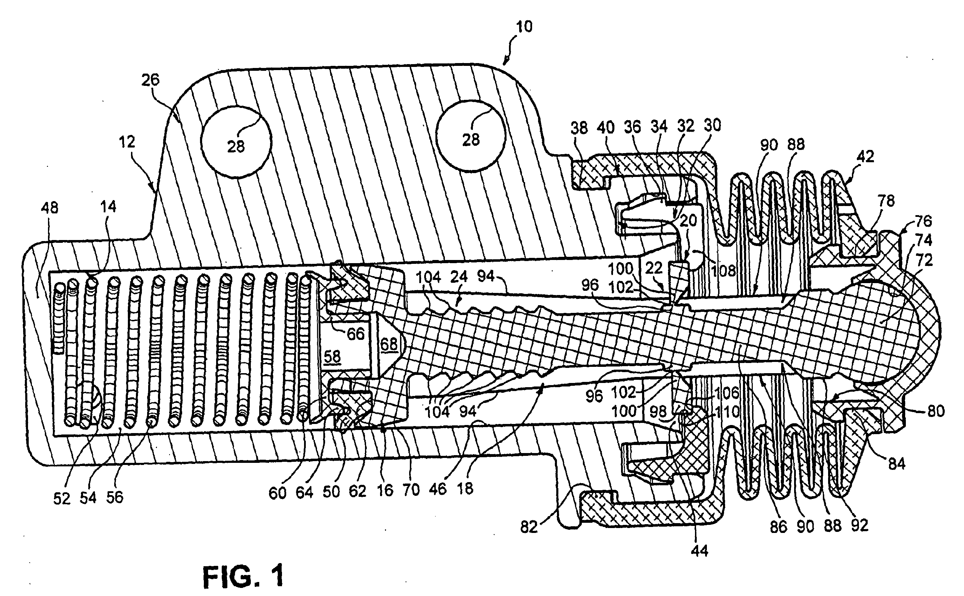

- Fig. 1: eine im Maßstab gegenüber den tatsächlichen Abmessungen vergrößerte Längsschnittansicht eines ein Zylindergehäuse und einen darin aufgenommenen Kolben aufweisenden Nehmerzylinders für eine hydraulische Kupplungsbetätigung für Kraftfahrzeuge nach einem ersten Ausführungsbeispiel der Erfindung im uneingebauten Zustand vor seiner ersten Betätigung, bei dem eine einstückig mit dem Kolben ausgebildete Kolbenstange mittels eines über Sollbruchstellen lösbar mit der Kolbenstange verbundenen Fixierelements bezüglich des Zylindergehäuses in einer vorbestimmten Hubstellung temporär fixiert ist,
- Fig. 2: eine perspektivische Darstellung des den Kolben, die Kolbenstange und das Fixierelement ausbildenden Bauteils des Nehmerzylinders gemäß Fig. 1 mit dessen kolbenseitigen Ende im Vordergrund in einer gegenüber der Darstellung in Fig. 1 geringfügig abgeänderten Ausgestaltung,
- Fig. 3: eine perspektivische Darstellung des den Kolben, die Kolbenstange und das Fixierelement ausbildenden Bauteils gemäß Fig. 2 mit dessen vom Kolben abgewandten Ende im Vordergrund,
- Fig. 4: eine Seitenansicht des den Kolben, die Kolbenstange und das Fixierelement ausbildenden Bauteils gemäß Fig. 2,
- Fig. 5: eine Schnittansicht des den Kolben, die Kolbenstange und das Fixierelement ausbildenden Bauteils gemäß Fig. 2 entsprechend der Schnittverlaufslinie V-V in Fig. 4,
- Fig. 6: eine Längsschnittansicht des den Kolben, die Kolbenstange und das Fixierelement ausbildenden Bauteils gemäß Fig. 2 entsprechend der Schnittverlaufslinie VI-VI in Fig. 5,

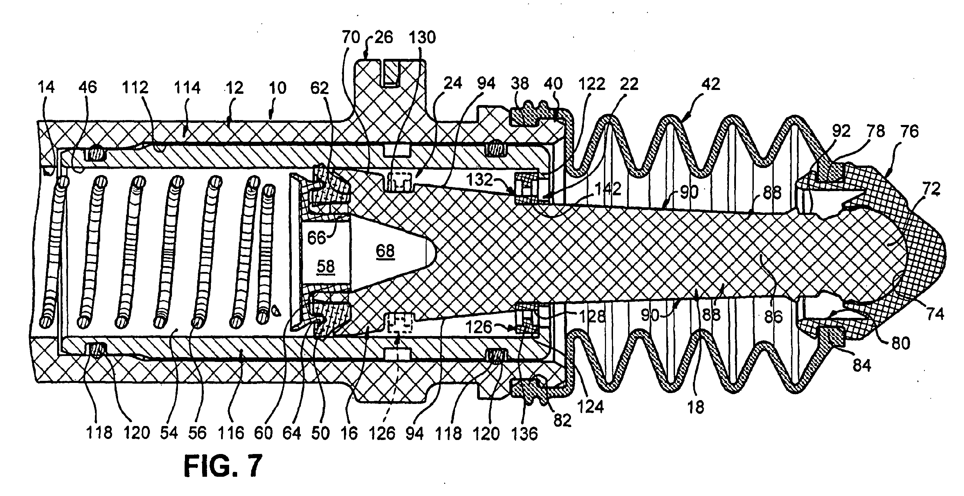

- Fig. 7: eine im Maßstab gegenüber den tatsächlichen Abmessungen vergrößerte, auf einer Seite abgebrochene Längsschnittansicht eines ein Zylindergehäuse und einen darin aufgenommenen Kolben aufweisenden Nehmerzylinders für eine hydraulische Kupplungsbetätigung für Kraftfahrzeuge nach einem zweiten Ausführungsbeispiel der Erfindung im uneingebauten Zustand vor seiner ersten Betätigung, bei dem eine einstückig mit dem Kolben ausgebildete Kolbenstange mittels eines separaten, an der Kolbenstange über einen Tragring lösbar gehaltenen Fixierelements bezüglich des Zylindergehäuses in einer vorbestimmten Hubstellung temporär gefesselt ist, wobei mit gestrichelten Linien das Fixierelement in seiner zweiten, kolbenstangenfesten Position dargestellt ist, in die das Fixierelement mit der ersten Betätigung des Nehmerzylinders verlagerbar ist,
- Fig. 8: eine Seitenansicht der aus dem Kolben, der Kolbenstange, dem Fixierelement, dessen Tragring sowie einem Dichtelement und einem Zentrierelement dafür bestehenden Baugruppe des Nehmerzylinders gemäß Fig. 7 in einem gegenüber der Darstellung in Fig. 7 verkleinerten Maßstab,
- Fig. 9: eine perspektivische Darstellung des das Fixierelement und dessen Tragring ausbildenden Bauteils des Nehmerzylinders gemäß Fig. 7 in einem gegenüber der Darstellung in Fig. 7 vergrößerten Maßstab, wobei das Bauteil in seinem Zustand vor der ersten Betätigung des Nehmerzylinders gezeigt ist, in dem das Fixierelement und der Tragring über Sollbruchstellen lösbar miteinander verbunden sind,
- Fig. 10: eine Draufsicht auf das das Fixierelement und dessen Tragring ausbildenden Bauteils gemäß Fig. 9,
- Fig. 11: eine Längsschnittansicht des das Fixierelement und dessen Tragring ausbildenden Bauteils gemäß Fig. 9 entsprechend der Schnittverlaufslinie XI-XI in Fig. 10,
- Fig. 12: eine Längsschnittansicht des das Fixierelement und dessen Tragring ausbildenden Bauteils gemäß Fig. 9 entsprechend der Schnittverlaufslinie XII-XII in Fig. 10,

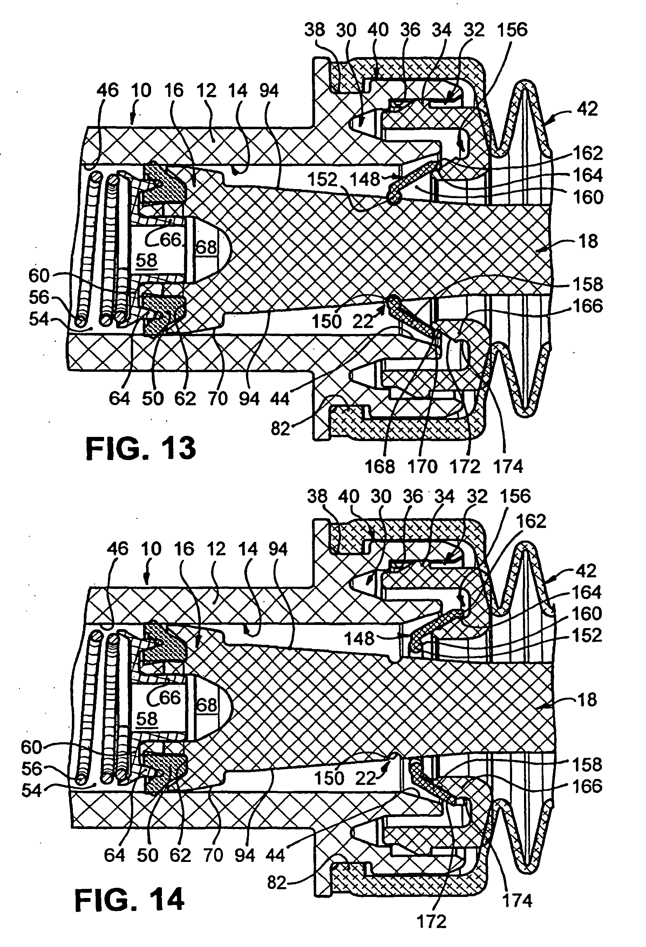

- Fig. 13: eine im Maßstab gegenüber den tatsächlichen Abmessungen vergrößerte, zu beiden Seiten abgebrochene Längsschnittansicht eines ein Zylindergehäuse und einen darin aufgenommenen Kolben aufweisenden Nehmerzylinders für eine hydraulische Kupplungsbetätigung für Kraftfahrzeuge nach einem dritten Ausführungsbeispiel der Erfindung vor seiner ersten Betätigung, bei dem eine einstückig mit dem Kolben ausgebildete Kolbenstange mittels eines separaten, lösbar in einer Radialnut an der Kolbenstange eingreifenden Fixierelements bezüglich des Zylindergehäuses in einer vorbestimmten Hubstellung temporär fixiert ist,
- Fig. 14: eine im Maßstab gegenüber den tatsächlichen Abmessungen vergrößerte, zu beiden Seiten abgebrochene Längsschnittansicht des Nehmerzylinders gemäß Fig. 13 nach seiner ersten Betätigung, bei dem das Fixierelement von der Radialnut an der Kolbenstange außer Eingriff gekommen ist und sich in einer zweiten, zylindergehäusefesten Position an einem am Zylindergehäuse befestigten Sicherungselement befindet, in die das Fixierelement mit der ersten Betätigung des Nehmerzylinders verlagert wurde,
- Fig. 15: eine Draufsicht auf das Fixierelement des Nehmerzylinders gemäß Fig. 13,
- Fig. 16: eine Längsschnittansicht des Fixierelements des Nehmerzylinders gemäß Fig. 13 entsprechend der Schnittverlaufslinie XVI-XVI in Fig. 15 und
- Fig. 17: eine Längsschnittansicht des das Fixierelement in seiner zweiten, zylindergehäusefesten Position haltenden Sicherungselements des Nehmerzylinders gemäß Fig. 13.

Vorab sei an dieser Stelle noch angemerkt, daß in den Figuren sämtliche elastomeren Bauteile, namentlich Dichtungsringe, O-Ringe und Faltenbälge zur Vereinfachung der Darstellung im unverformten Zustand gezeigt sind. Daher überschneiden sich in den Figuren diese Bauteile z.T. mit angrenzenden Bauteilen. Tatsächlich liegt dort das jeweilige elastomere Bauteil aber unter entsprechender Verformung an dem jeweiligen angrenzenden Bauteil an.

In Fig. 1 ist nun exemplarisch für einen Hydraulikzylinder ein Nehmerzylinder 10 für eine hydraulische Kupplungsbetätigung für Kraftfahrzeuge gezeigt, der ein im dargestellten Ausführungsbeispiel metallisches Zylindergehäuse 12 hat, in das ausgehend von einer Stirnseite eine als Sackbohrung ausgebildete Gehäusebohrung 14 eingebracht ist. In der Gehäusebohrung 14 ist ein im dargestellten Ausführungsbeispiel aus einem Kunststoff ausgebildeter Kolben 16 längsverschieblich aufgenommen, dem eine Kolbenstange 18 zugeordnet ist. Wie noch näher beschrieben werden wird, hat der Nehmerzylinder 10 des weiteren ein Fixierelement 20, das vor einer ersten Betätigung des Nehmerzylinders 10 lösbar mit der Kolbenstange 18 verbunden ist und diese bezüglich des Zylindergehäuses 12 in einer vorbestimmten Hubstellung fixiert, und welches dazu ausgebildet ist, mit der ersten Betätigung des Nehmerzylinders 10 die Kolbenstange 18 gegenüber dem Zylindergehäuse 12 freizugeben. Wesentlich ist, daß das Fixierelement 20 - wie in Fig. 1 gezeigt - vor der ersten Betätigung des Nehmerzylinders 10 in einer ersten Position mit einem mittleren Bereich 22 der Kolbenstange 18 lösbar verbunden ist und mit der ersten Betätigung des Nehmerzylinders 10 von dieser ersten Position in einen zweiten, im dargestellten Ausführungsbeispiel kolbenstangenfesten (oder alternativ dazu: zylindergehäusefesten) Positionsbereich 24 verlagerbar ist, in dem das Fixierelement 20 für weitere Betätigungen des Nehmerzylinders 10 festlegbar ist, um dort zu verbleiben, wie nachfolgend ebenfalls noch ausführlich erläutert werden wird.

Gemäß Fig. 1 ist das Zylindergehäuse 12 außenumfangsseitig mit einem Befestigungsflansch 26 für die Montage des Nehmerzylinders 10 im Kraftfahrzeug versehen, der zwei Befestigungsbohrungen 28 aufweist, durch die sich im montierten Zustand des Nehmerzylinders 10 z.B. Schrauben (nicht gezeigt) hindurch erstrecken, die der Befestigung des Nehmerzylinders 10 an etwa einer Getriebewand (nicht dargestellt) im Kraftfahrzeug dienen.

An seinem in Fig. 1 rechten, offenen Ende ist das Zylindergehäuse 12 des weiteren mit einer ringförmigen Ausnehmung 30 versehen, die der Zentrierung und Befestigung eines im dargestellten Ausführungsbeispiel ebenfalls aus Kunststoff bestehenden, ringförmigen Sicherungselements 32 dient, durch das sich die Kolbenstange 18 hindurch erstreckt und welches u.a. verhindert, daß der Kolben 16 aus der Gehäusebohrung 14 hinausgezogen werden kann. In der ringförmigen Ausnehmung 30 ist das geschlitzte, einen im wesentlichen L-förmigen Querschnitt aufweisende Sicherungselement 32 mittels einer an seinem längeren Schenkel außenumfangsseitig angebrachten, umlaufenden Nase 34 zug- und druckfest festgelegt, welche einen Hinterschnitt an einer in der ringförmigen Ausnehmung 30 vorgesehenen Aussparung 36 hintergreift. Das Zylindergehäuse 12 weist ferner im Bereich seines in Fig. 1 rechten, offenen Endes außenumfangsseitig einen mit einer Radialnut 38 versehenen Befestigungsabschnitt 40 für einen die beweglichen Teile des Nehmerzylinder 10 gegenüber der Umgebung schützenden, an sich bekannten elastomeren Faltenbalg 42 auf. Ausgehend vom offenen Ende des Zylindergehäuses 12 erstreckt sich in Fig.1 nach links die Gehäusebohrung 14, die zunächst eine konische Fügeschräge 44 für den Kolben 16 sowie einen sich daran anschließenden zylindrischen Abschnitt 46 aufweist, der an einer ebenen Bodenwand 48 des Zylindergehäuses 12 endet und die Lauffläche für ein am Kolben 16 angebrachtes, an sich bekanntes Dichtelement 50 ausbildet, welches eine Ringform hat und aus einem Elastomer besteht. Nahe der Bodenwand 48 hat das Zylindergehäuse 12 schließlich einen Druckanschluß 52, über den eine Druckkammer 54, die in Fig. 1 nach links von der Bodenwand 48, nach rechts von dem Kolben 16 und nach radial außen von dem zylindrischen Abschnitt 46 der Gehäusebohrung 14 begrenzt wird, in an sich bekannter Weise mit einem hydraulischen Druckmittel beaufschlagt werden kann, wenn der Nehmerzylinder 10 im Kraftfahrzeug montiert ist, um eine in Fig. 1 nach rechts gerichtete Kraft auf den Kolben 16 auszuüben.

In der Druckkammer 54 ist eine Vorspannfeder 56 in Form einer Schraubendruckfeder aufgenommen, die sich mit ihrem einen, in Fig. 1 linken Ende an der Bodenwand 48 des Zylindergehäuses 12 abstützt, während ihr zweites, in Fig. 1 rechtes Ende an einem am Kolben 16 befestigten Zentrierelement 58 für das Dichtelement 50, genauer einem Federtellerabschnitt 60 des aus Kunststoff spritzgegossenen Zentrierelements 58 anliegt. Es ist ersichtlich, daß die Vorspannfeder 56 somit auf den Kolben 16 eine Vorspannkraft ausübt, die bestrebt ist, den Kolben 16 in Fig. 1 nach rechts zu verschieben.

Bei dem Kolben 16 handelt es sich in den dargestellten Ausführungsbeispielen um einen in der Gehäusebohrung 14 kippfähigen, werkzeugfallend aus Kunststoff spritzgegossenen Kolben, wie er prinzipiell aus der DE 43 31 241 A1 der Anmelderin bekannt ist. Dieser Kolben 16 hat stirnseitig eine zur Druckkammer 54 hin offene, d.h. hinterschnittsfrei ausgebildete, ringförmige Axialnut 62, in der das Dichtelement 50 aufgenommen ist. In der Axialnut 62 des Kolbens 16 ist das Dichtelement 50 durch einen vom Federtellerabschnitt 60 des Zentrierelements 58 ausgehenden, ringförmigen Zentrieransatz 64 des Zentrierelements 58 gehalten, welches seinerseits über einen sich radial innerhalb des Zentrieransatzes 64 an den Federtellerabschnitt 60 anschließenden, hohlzylindrischen Befestigungsabschnitt 66 in einem zylindrischen Abschnitt einer stirnseitig im Kolben 16 ausgebildeten, zentralen Aussparung 68 auf geeignete Weise, z.B. mittels Klebstoff, befestigt ist.

Der eine zur Kolbenstange 18 hin konisch oder ballig abfallende Außenfläche 70 aufweisende Kolben 16 ist im dargestellten Ausführungsbeispiel durch Spritzgießen aus Kunststoff einstückig mit der Kolbenstange 18 ausgebildet, deren vom Kolben 16 abgewandtes Ende als Kugelkopf 72 geformt ist. Der Kugelkopf 72 der Kolbenstange 18 greift formschlüssig in einen Kugelkalottenabschnitt 74 einer an sich bekannten, gegenüber der Kolbenstange 18 verschwenkbaren Staubschutzkappe 76 ein, über die die Kolbenstange 18 im im Kraftfahrzeug montierten Zustand des Nehmerzylinders 10 betätigungswirksam an einem Kupplungshebel (nicht gezeigt) angreift. Auch die Staubschutzkappe 76 hat einen eine Radialnut 78 aufweisenden Befestigungsabschnitt 80 für den Faltenbalg 42. Der die Kolbenstange 18 umgebende Faltenbalg 42 schließlich weist an beiden Längsenden jeweils einen nach radial innen vorspringenden Bund 82, 84 auf, von denen der eine, in Fig. 1 linke Bund 82 in die am Befestigungsabschnitt 40 des Zylindergehäuses 12 ausgebildete Radialnut 38 eingreift, während der andere, in Fig. 1 rechte Bund 84 in die am Befestigungsabschnitt 80 der Staubschutzkappe 76 ausgebildete Radialnut 78 eingreift, um den Faltenbalg 42 sowohl am Zylindergehäuse 12 als auch an der Kolbenstange 18 zu befestigen.

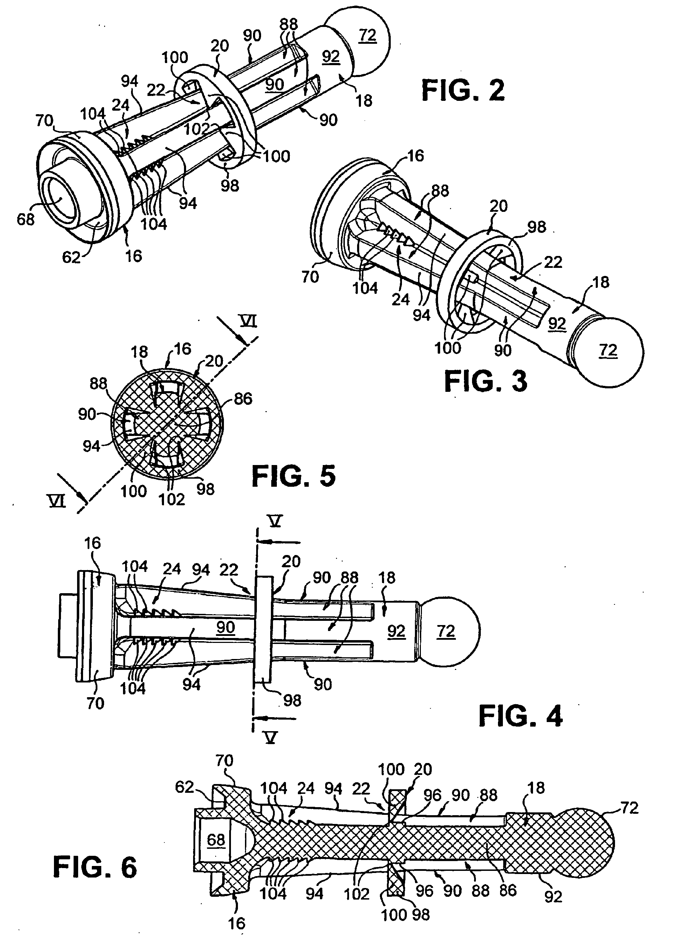

Die Fig. 2 bis 6 zeigen das den Kolben 16, die Kolbenstange 18 und das Fixierelement 20 ausbildende Bauteil ohne das Dichtelement 50 und das Zentrierelement 58. Wie insbesondere den Fig. 2, 3 und 5 zu entnehmen ist, hat die Kolbenstange 18 im dargestellten Ausführungsbeispiel u.a. zur Gewichtseinsparung bei hinreichender Knickfestigkeit über ihre Hauptlänge einen im wesentlichen kreuzförmigen Querschnitt, mit einem über seine Länge im Durchmesser gleichbleibenden Kern 86 und vier gleichmäßig winkelbeabstandet am Außenumfang des Kerns 86 verteilten Profilstegen 88, deren Außenfläche 90 ausgehend von einem sich an den Kugelkopf 72 anschließenden Zylinderabschnitt 92 der Kolbenstange 18 zunächst parallel zur Mittelachse der Kolbenstange 18 verläuft bevor sie einhergehend mit einer Querschnittsvergrößerung der Profilstege 88 über eine Schräge 94 zum Kolben 16 hin ansteigt. Wie ferner die Fig. 1 und 6 zeigen, ist die Kolbenstange 18 am Außenumfang ihres Kerns 86 in Längsrichtung der Kolbenstange 18 gesehen im wesentlichen mittig und in Umfangsrichtung der Kolbenstange 18 gesehen zwischen jeweils zwei benachbarten Profilstegen 88 mit jeweils einem erhabenen Sitzabschnitt 96 für das Fixierelement 20 versehen.

Das im dargestellten Ausführungsbeispiel ebenfalls durch Spritzgießen aus Kunststoff einstückig mit dem Kolben 16 und der Kolbenstange 18 ausgebildete, die Kolbenstange 18 umgebende, ringförmige Fixierelement 20 weist einen Außenring 98 mit einem rechteckigen Querschnitt sowie eine Mehrzahl von, hier vier gleichmäßig winkelbeabstandete, sich vom Außenring 98 nach radial innen erstreckende Verbindungsstege 100 auf, die vor der ersten Betätigung des Nehmerzylinders 10 jeweils über eine linienartig ausgeführte Sollbruchstelle 102 mit der Kolbenstange 18, genauer mit deren Sitzabschnitten 96 verbunden sind. Wie insbesondere die Fig. 1, 5 und 6 zeigen, sind die Sollbruchstellen 102 zwischen den Verbindungsstegen 100 des Fixierelements 20 und den Sitzabschnitten 96 an der Kolbenstange 18 jeweils durch eine Querschnittsverjüngung des jeweiligen Verbindungsstegs 100 ausgebildet. Jeder Verbindungssteg 100 des Fixierelements 20 verjüngt sich in einer Draufsicht gesehen im wesentlichen V-förmig vom Außenring 98 des Fixierelements 20 zum Kern 86 der Kolbenstange 18 hin, wie insbesondere den Fig. 2 und 5 zu entnehmen ist, so daß sich im Verhältnis schmale Sollbruchstellen 102 ergeben, während sich jeder Verbindungssteg 100 zugleich in einer Seitenansicht gesehen im wesentlichen keilförmig vom Außenring 98 des Fixierelements 20 zum Kern 86 der Kolbenstange 18 hin verjüngt, so daß sich im Verhältnis auch dünne Sollbruchstellen 102 ergeben. Die keilförmige Verjüngung der Verbindungsstege 100 ist den Fig. 1, 3 und 6 zu entnehmen. Infolge der beschriebenen Querschnittsverjüngung der Verbindungsstege 100 vermögen diese bei Aufbringung einer vorbestimmten Kraft auch einen gewissen Betrag in axialer Richtung des Fixierelements 20 bzw. der Kolbenstange 18 zu federn.

Wie des weiteren die Fig. 1 bis 4 und 6 zeigen, befindet sich der zweite, kolbenstangenfeste Positionsbereich 24 für das Fixierelement 20, in den das Fixierelement 20 mit der ersten Betätigung des Nehmerzylinders 10 verlagerbar ist, zwischen der ersten Position des Fixierelements 20 an der Kolbenstange 18 und dem Kolben 16 nahe dem Kolben 16. In diesem zweiten, kolbenstangenfesten Positionsbereich 24 für das Fixierelement 20 ist eine Struktur bzw. ein Profil ausgebildet, mit der/dem eine Struktur bzw. ein Profil am Fixierelement 20 formschlüssig in Eingriff gebracht werden kann, um das Fixierelement 20 für weitere Betätigungen des Nehmerzylinders 10 im zweiten, kolbenstangenfesten Positionsbereich 24 festzulegen. Genauer gesagt ist im zweiten, kolbenstangenfesten Positionsbereich 24 für das Fixierelement 20 eine Mehrzahl von Rastnasen 104 vorgesehen, die beim Spritzgießen des aus Kolben 16, Kolbenstange 18 und Fixierelement 20 bestehenden Bauteils gleich mit ausgebildet werden und mit denen die sich vom Außenring 98 des Fixierelements 20 nach radial innen erstreckenden, in axialer Richtung der Kolbenstange 18 federnden Verbindungsstege 100 des Fixierelements 20 mit der ersten Betätigung des Nehmerzylinders 10 verrastbar sind. Den Fig. 1 bis 4 und 6 ist ferner zu entnehmen, daß jeweils sechs (Fig. 1) bzw. fünf (Fig. 2 bis 4 und 6) Rastnasen 104 in Längsrichtung der Kolbenstange 18 gesehen hintereinander und in Umfangsrichtung der Kolbenstange 18 gesehen zwischen jeweils zwei benachbarten Profilstegen 88 nahe dem Kern 86 der Kolbenstange 18 an der Kolbenstange 18 ausgebildet sind. Den beiden in Fig. 1 einerseits und den Fig. 2 bis 4 und 6 andererseits dargestellten Varianten der Rastnasen 104 ist gemein, daß sie sägezahnartig ausgebildet sind, wobei ihre dem Kolben 16 zugewandten Flanken bezüglich der Mittelachse der Kolbenstange 18 steiler angestellt sind als ihre dem Kugelkopf 72 der Kolbenstange 18 zugewandten Flanken, die flacher verlaufen. Bei der Bemessung der Anzahl, der Größe und der Lage der Rastnasen 104 an der Kolbenstange 18 ist der erforderliche Ausrückhub des Nehmerzylinders 10 sowie der Verschleißweg und dessen Richtungsverlauf der jeweiligen Trockenreibkupplung, an der der Nehmerzylinder 10 zum Einsatz kommen soll, zu berücksichtigen.

In dem in Fig. 1 gezeigten Zustand des Nehmerzylinders 10 vor dessen erster Betätigung liegt der Außenring 98 des in seiner ersten Position an der Kolbenstange 18 befindlichen Fixierelements 20 mit seiner vom Kolben 16 abgewandten Stirnfläche an einer ringförmigen Widerlagerfläche 106 an, die am von der Kolbenstange 18 durchgriffenen, offenen Ende der Gehäusebohrung 14 an einem in radialer Richtung nach innen über die Gehäusebohrung 14 vorstehenden Bundabschnitt 108 des Sicherungselements 32 ausgebildet ist, und wird durch die auf den Kolben 16 wirkende Vorspannfeder 56 in dieser Anlagesituation gehalten. An die ebene Widerlagerfläche 106 schließt sich nach radial außen eine zylindrische Zentrierfläche 110 an, die ebenfalls am Bundabschnitt 108 des Sicherungselements 32 ausgebildet ist und das Fixierelement 20 bezüglich des Sicherungselements 32 zentriert. Im Ergebnis wird die Kolbenstange 18 durch das Fixierelement 20 sowohl in einer vorbestimmten Hub-, d.h. Axialstellung im Zylindergehäuse 12 gehalten als auch in einer vorbestimmten Winkelstellung bezüglich der Mittelachse der Gehäusebohrung 14 im Zylindergehäuse 12.

Bei der ersten Betätigung des Nehmerzylinders 10 wird hydraulisches Druckmittel in an sich bekannter Weise über den Druckanschluß 52 in die Druckkammer 54 hinein gedrückt. Infolgedessen wirkt zusätzlich zu der Kraft der Vorspannfeder 56 eine hydraulisch aufgebrachte Kraft am Kolben 16, die bestrebt ist, den Kolben 16 in Fig. 1 nach rechts zu verschieben. Im Ergebnis wird das Fixierelement 20, genauer dessen Außenring 98 mit seiner vom Kolben 16 abgewandten Stirnfläche mit einer höheren Kraft gegen die Widerlagerfläche 106 an dem mittels der umlaufenden Nase 34 fest am Zylindergehäuse 12 gehaltenen Sicherungselement 32 gedrückt. Übersteigt diese Kraft eine konstruktiv vorgegebene Kraft reißt das Fixierelement 20 an den Sollbruchstellen 102 von der Kolbenstange 18 ab und letztere kommt vom Fixierelement 20 frei.

In der Folge wird die Kolbenstange 18 durch das an der Zentrierfläche 110 des Sicherungselements 32 gehaltene Fixierelement 20 hindurch in Fig. 1 nach rechts verschoben. Bei dieser Bewegung kommen die dem Kugelkopf 72 der Kolbenstange 18 nächsten Rastnasen 104, genauer deren vom Kolben 16 abgewandte Flanken an den dem Kolben 16 zugewandten Stirnflächen der Verbindungsstege 100 des Fixierelements 20 zur Anlage, worauf die Verbindungsstege 100 federnd in Bewegungsrichtung der Kolbenstange 18, d.h. nach rechts in Fig. 1 nachgeben und über die dem Kugelkopf 72 der Kolbenstange 18 nächsten Rastnasen 104 hinweggleiten, um zwischen diesen Rastnasen 104 und den darauf in axialer Richtung folgenden Rastnasen 104 einzurasten. Dieser Rastvorgang wiederholt sich nun an den in axialer Richtung folgenden Rastnasen 104 bis der Kolben 16 seine maximale Hubposition im Zylindergehäuse 12 erreicht hat.

Wenn sodann die Druckkammer 54 zur Beendigung der ersten Betätigung des Nehmerzylinders 10 druckentlastet wird, verschiebt der mit dem Kugelkopf 72 der Kolbenstange 18 wirkverbundene, federvorgespannte Kupplungshebel (nicht dargestellt) den Kolben 16 über die Kolbenstange 18 gegen die Kraft der Vorspannfeder 56 zurück in Richtung der Bodenwand 48 des Zylindergehäuses 12, d.h. nach links in Fig. 1. Dabei nimmt die Kolbenstange 18 das nunmehr im zweiten kolbenstangenfesten Positionsbereich 24 für das Fixierelement 20 formschlüssig zwischen in Längsrichtung der Kolbenstange 18 benachbarten Rastnasen 104 an den Verbindungsstegen 100 gehaltene Fixierelement 20 mit, so daß sich dieses vom Sicherungselement 32 in Fig. 1 nach links wegbewegt.

Zu erwähnen ist in diesem Zusammenhang noch, daß bei dem in den Fig. 1 bis 7 dargestellten Ausführungsbeispiel der lichte radiale Abstand der Verbindungsstege 100 des von der Kolbenstange 18 getrennten Fixierelements 20 oder, mit anderen Worten gesagt, der radiale Abstand zwischen bezüglich der Mittelachse der Kolbenstange 18 gegenüberliegenden Sollbruchstellen 102 des Fixierelements 20 geringfügig größer gewählt ist als der Durchmesser des Kolbenstangenkerns 86 zwischen in Längsrichtung der Kolbenstange 18 benachbarten Rastnasen 104, so daß die Verbindungsstege 100 des Fixierelements 20 nach dem jeweiligen Rastvorgang in ihre ursprüngliche Form zurückfedern können und das Fixierelement 20 allein formschlüssig an den Rastnasen 104 gehalten ist. Den jeweiligen Befestigungserfordernissen entsprechend kann diesem Formschluß auch ein Kraftschluß überlagert werden, etwa indem der Durchmesser des Kerns 86 zwischen in Längsrichtung der Kolbenstange 18 benachbarten Rastnasen 104 geringfügig größer gewählt wird als der radiale Abstand zwischen bezüglich der Mittelachse der Kolbenstange 18 gegenüberliegenden Sollbruchstellen 102 des Fixierelements 20, so daß die Verbindungsstege 100 in ihrer Raststellung zwischen in Längsrichtung der Kolbenstange 18 benachbarten Rastnasen 104 federnd gegen die Kolbenstange 18 drücken.

Es ist ersichtlich, daß das Fixierelement 20 nach der ersten Betätigung des Nehmerzylinders 10 stets in dem zweiten kolbenstangenfesten Positionsbereich 24 für das Fixierelement 20 nahe dem Kolben 16 verbleibt, dort also verliersicher festgelegt ist, so daß es u.a. eine Kippbewegung der Kolbenstange 18 bezüglich der Mittelachse der Gehäusebohrung 14 im Zylindergehäuse 12, die in der Praxis z.B. +/- 5° betragen kann, nicht behindert. Arbeitsweise und Funktion des Nehmerzylinders 10 in einer hydraulischen Kupplungsbetätigung sind im übrigen hinreichend bekannt, so daß hierzu an dieser Stelle weitere Ausführungen entbehrlich sind.

Das in den Fig. 7 bis 12 dargestellte zweite Ausführungsbeispiel soll nachfolgend nur insofern beschrieben werden, als es sich von dem unter Bezugnahme auf die Fig. 1 bis 6 beschriebenen ersten Ausführungsbeispiel unterscheidet und es für das Verständnis des zweiten Ausführungsbeispiels notwendig erscheint. Gleiche oder den Bauteilen des ersten Ausführungsbeispiels entsprechende Bauteile des zweiten Ausführungsbeispiels sind hierbei mit den gleichen Bezugszeichen versehen wie die Bauteile des ersten Ausführungsbeispiels.

Im Gegensatz zu dem ersten Ausführungsbeispiel ist das Zylindergehäuse 12 bei dem zweiten Ausführungsbeispiel des Nehmerzylinders 10 gemäß Fig. 7 mehrteilig ausgebildet, mit einem eine Stufenbohrung 112 aufweisenden, aus Kunststoff bestehenden Gehäusegrundkörper 114 und einer darin eingesetzten, metallischen Laufbüchse 116 mit dem zylindrischen Abschnitt 46 als Lauffläche für das am Kolben 16 angebrachte Dichtelement 50. Zur Vermeidung von Leckagen zwischen dem Gehäusegrundkörper 114 und der Laufbüchse 116 ist letztere außenumfangsseitig zu beiden Längsenden mit jeweils einer Radialnut 118 versehen, in die ein O-Ring 120 eingesetzt ist, der dichtend an der Innenumfangsfläche der Stufenbohrung 112 im Gehäusegrundkörper 114 anliegt. Am offenen Ende des Zylindergehäuses 12, d.h. an dem in Fig. 7 rechten Ende der Laufbüchse 116 ist diese mit einem in radialer Richtung nach innen vorspringenden Ringbund 122 versehen, dessen dem Kolben 16 zugewandte Stirnfläche eine ebene, ringförmige Widerlagerfläche 124 für ein Fixierelement 126 ausbildet, welches dem gleichen Zweck wie das Fixierelement 20 bei dem ersten Ausführungsbeispiel dient. Das in Fig. 7 nicht dargestellte Längsende des Nehmerzylinders 10 gemäß dem zweiten Ausführungsbeispiel kann im übrigen wie das in Fig. 1 linke Ende des Nehmerzylinders 10 gemäß dem ersten Ausführungsbeispiel ausgestaltet sein.

Die Kolbenstange 18 des Nehmerzylinders 10 gemäß dem zweiten Ausführungsbeispiel unterscheidet sich von der Kolbenstange 18 des Nehmerzylinders 10 gemäß dem ersten Ausführungsbeispiel im wesentlichen darin, daß sowohl die Sitzabschnitte 96 als auch die Rastnasen 104 des ersten Ausführungsbeispiels fehlen. Statt dessen ist die Kolbenstange 18 beim zweiten Ausführungsbeispiel mit zwei Sitzen in Form von in die Profilstege 88 eingebrachten, umlaufenden Radialnuten 128, 130 versehen, die in Längsrichtung der Kolbenstange 18 gesehen einen Abstand voneinander haben, der mindestens dem Ausrückhub der Trockenreibkupplung entspricht, an der der Nehmerzylinder 10 zum Einsatz kommen soll. Die im mittleren Bereich 22 der Kolbenstange 18 etwas außermittig zum Kolben 16 hin angeordnete Radialnut 128 dient der formschlüssigen Festlegung eines Tragrings 132, der das Fixierelement 126 vor der ersten Betätigung des Nehmerzylinders 10 in seiner ersten Position trägt, wie insbesondere die Fig. 7 zeigt. Die nahe am Kolben 16, im zweiten kolbenstangenfesten Positionsbereich 24 für das Fixierelement 126 ausgebildete Radialnut 130 hingegen, deren Nutgrund einen größeren Durchmesser aufweist als der Nutgrund der Radialnut 128, dient, wie in Fig. 7 mit gestrichelten Linien angedeutet, der formschlüssigen Festlegung des Fixierelements 126, wenn der Nehmerzylinder 10 zum ersten Mal betätigt wird.

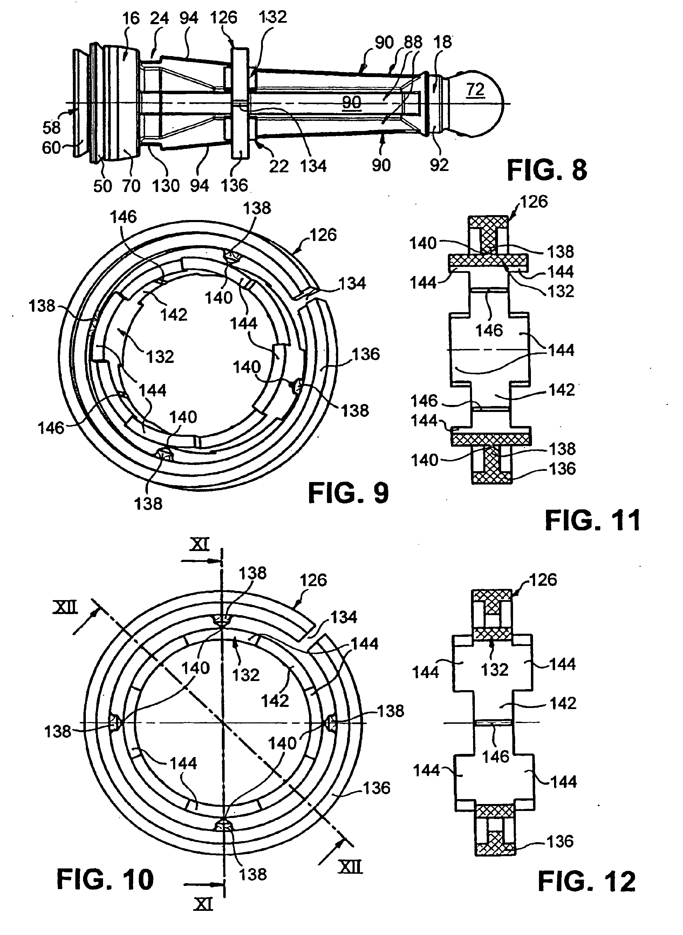

Wie die Fig. 9 bis 12 zeigen, handelt es sich bei dem Fixierelement 126 um ein von der Kolbenstange 18 separates Teil, welches durch Spritzgießen aus Kunststoff einteilig mit dem Tragring 132 ausgebildet ist. Das Fixierelement 126 selbst hat einen mit einem durchgehenden Längsschlitz 134 versehenen Außenring 136, der einen im wesentlichen T-förmigen Querschnitt aufweist. An den Außenring 136 schließen sich innenumfangsseitig eine Mehrzahl von, im dargestellten Ausführungsbeispiel vier bezüglich der Mittelachse des Außenrings 136 gleichmäßig winkelbeabstandete, sich nach radial innen erstreckende noppenartige Verbindungsstege 138 an, über die das Fixierelement 126 lösbar mit dem Tragring 132 verbunden ist. Genauer gesagt verjüngen sich die Verbindungsstege 138 derart zum Tragring 132 hin, daß sie jeweils nur über einen im Verhältnis kleinen Querschnitt mit dem Tragring 132 verbunden sind, der als Sollbruchstelle 140 dient. Im Ergebnis ist auch bei diesem Ausführungsbeispiel die lösbare Verbindung zwischen der Kolbenstange 18 und dem Fixierelement 126 in dessen erster Position stoffschlüssig über Sollbruchstellen 140 hergestellt, die hier allerdings zwischen dem Fixierelement 126 und dem Tragring 132 vorgesehen sind.

Gemäß den Fig. 9 bis 12 ist der konzentrisch innerhalb des Außenrings 136 angeordnete Tragring 132 zu beiden Längsenden hin kronenartig ausgebildet, mit einem mittleren Ringabschnitt 142 und sich davon jeweils zur Seite erstreckenden Vorsprüngen 144. Die Anzahl (vier) und die Lage (gleichmäßig winkelbeabstandet bezüglich der Mittelachse des Tragrings 132) sowie die Abmessungen der Vorsprünge 144 sind derart gewählt, daß diese den Tragring 132 drehfest an der Kolbenstange 18 festzulegen vermögen, wobei der Tragring 132 nur mit seinem Ringabschnitt 142 in die Radialnut 128 an der Kolbenstange 18 eingreift, während die Vorsprünge 144 jeweils zwischen in Umfangsrichtung der Kolbenstange 18 benachbarten Profilstegen 88 der Kolbenstange 18 aufgenommen sind, wie Fig. 8 veranschaulicht.

In den Fig. 9, 11 und 12 sind ferner streifenförmige, sich in Längsrichtung des Tragrings 132 erstreckende Profile 146 zu erkennen, die in Umfangsrichtung gesehen zwischen den Vorsprüngen 144 am Innenumfang des Ringabschnitts 142 ausgebildet sind, um die Montage des das Fixierelement 126 und dessen Tragring 132 ausbildenden Bauteils an der Kolbenstange 18 zu ermöglichen. Wie schließlich insbesondere die Fig. 11 und 12 zeigen, ist das das Fixierelement 126 und dessen Tragring 132 ausbildende Bauteil bezüglich einer gedachten, zu seiner Mittelachse senkrechten Ebene symmetrisch geformt, so daß dieses Bauteil ungerichtet an der Kolbenstange 18 montiert werden kann.

Gemäß Fig. 7 hält das Fixierelement 126 die Kolbenstange 18 vor der ersten Betätigung des Nehmerzylinders 10 in einer vorbestimmten Hubstellung, wobei die vom Kolben 16 abgewandte Stirnfläche des Außenrings 136 des Fixierelements 126 infolge der Vorspannkraft der Vorspannfeder 56 gegen die Widerlagerfläche 124 am Ringbund 122 der Laufbüchse 116 gedrückt wird.

Baut sich nun bei der ersten Betätigung des Nehmerzylinders 10 in dessen Druckkammer 54 ein Druck auf, wird das Fixierelement 126 mit einer höheren Kraft gegen den Ringbund 122 gedrückt. Wenn diese Kraft dabei eine konstruktiv vorbestimmte Kraft überschreitet, scheren die Verbindungsstege 138 des Fixierelements 126 an den Sollbruchstellen 140 vom Tragring 132 ab und die Kolbenstange 18 kommt vom Fixierelement 126 frei.

Sodann gelangt das Fixierelement 126 mit seinem Außenring 136, genauer dessen Innenumfang an den zum zweiten, kolbenstangenfesten Positionsbereich 24 für das Fixierelement 126 hin ansteigenden Schrägen 94 der Profilstege 88 der sich durch das Fixierelement 126 hindurch in Fig. 7 nach rechts bewegenden Kolbenstange 18 zur Anlage. Infolgedessen wird das geschlitzte Fixierelement 126 radial aufgefedert bis es in der umlaufenden Radialnut 128 im zweiten, kolbenstangenfesten Positionsbereich 24 für das Fixierelement 126 einschnappt. Im Ergebnis ist das Fixierelement 126 in der kolbennahen Radialnut 128 der Kolbenstange 18 durch Formschluß festgelegt, wie in Fig. 7 mit gestrichelten Linien gezeigt, so daß es gegen Ende der ersten Betätigung des Nehmerzylinders 10 mit dem Rücklauf des Kolbens 16 vom Ringbund 122 in Fig. 7 nach links wegbewegt wird.

Es ist ersichtlich, daß das Fixierelement 126 in seiner zweiten, kolbenstangenfesten Position als Anschlagelement dient, welches mit der Widerlagerfläche 124 des Ringbunds 122 als zylindergehäusefestem Gegenanschlag zusammenwirkt, so daß der Hub des Kolbens 16 in der Gehäusebohrung 14 des Zylindergehäuses 12 begrenzt ist.

Das in den Fig. 13 bis 17 dargestellte dritte Ausführungsbeispiel soll schließlich nachfolgend nur insofern beschrieben werden, als es sich von den unter Bezugnahme auf die Fig. 1 bis 12 beschriebenen Ausführungsbeispielen unterscheidet und es für das Verständnis des dritten Ausführungsbeispiels notwendig erscheint. Gleiche oder den Bauteilen der vorhergehenden Ausführungsbeispiele entsprechende Bauteile des dritten Ausführungsbeispiels sind hierbei mit den gleichen Bezugszeichen versehen wie die Bauteile der vorhergehenden Ausführungsbeispiele. In den Fig. 13 und 14 wurden die Längsenden des Nehmerzylinders 10 im übrigen nicht dargestellt, nachdem diese wie in den Fig. 1 bzw. 7 gezeigt ausgebildet sein können.

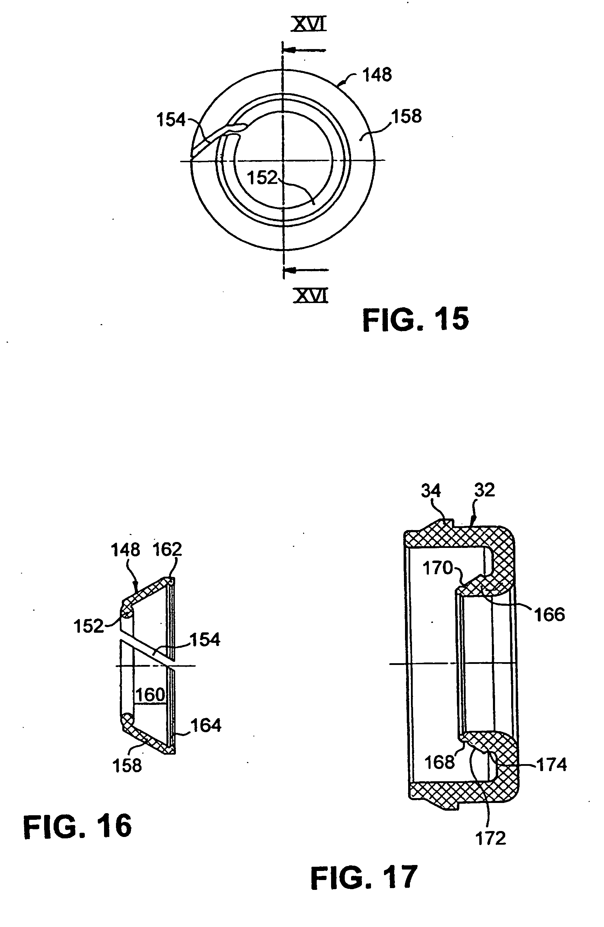

Im Gegensatz zu den vorhergehenden Ausführungsbeispielen ist bei dem Nehmerzylinder 10 gemäß dem dritten Ausführungsbeispiel die lösbare Verbindung zwischen einem dem gleichen Zweck wie die Fixierelemente 20, 126 dienenden Fixierelement 148 und der Kolbenstange 18 formschlüssig mittels komplementär ineinandergreifender Strukturen am Fixierelement 148 und an der Kolbenstange 18 hergestellt. Dabei ist das Fixierelement 148 federnd ausgebildet, so daß bei Aufbringung einer Kraft, die in Achsrichtung der Kolbenstange 18 wirkt und eine vorbestimmte Kraft überschreitet, die Strukturen unter einer radialen Ausweichbewegung des Fixierelements 148 außer Eingriff kommen. Genauer gesagt ist die Kolbenstange 18 in ihrem mittleren Bereich 22 mit einer Radialnut 150 versehen, die einen halbrunden Querschnitt aufweist und in die vor der ersten Betätigung des Nehmerzylinders 10 ein komplementär geformter Ringabschnitt 152 des Fixierelements 148 formschlüssig eingreift. Das Fixierelement 148 hat des weiteren, wie die Fig. 15 und 16 zeigen, einen schrägen, in Längsrichtung des Fixierelements 148 durchgehenden Schlitz 154, um nach radial außen auffedern zu können.

Ferner ist bei dem Nehmerzylinder 10 gemäß dem dritten Ausführungsbeispiel der zweite Positionsbereich 156 für das Fixierelement 148 im Gegensatz zu den vorhergehenden Ausführungsbeispielen zylindergehäusefest und befindet sich an dem von der Kolbenstange 18 durchgriffenen, offenen Ende der Gehäusebohrung 14 im Zylindergehäuse 12, genauer dem dort wie unter Bezugnahme auf die Fig. 1 beschrieben befestigten Sicherungselement 32.

Gemäß den Fig. 15 und 16 schließt sich an den Ringabschnitt 152 des Fixierelements 148 ein konischer Mantelabschnitt 158 mit einer innenumfangsseitigen Schräge 160 an, die gemäß Fig. 13 zum zweiten zylindergehäusefesten Positionsbereich 156 hin ansteigt. Der Mantelabschnitt 158 endet an einem Befestigungsabschnitt 162 des Fixierelements 148, welcher innenumfangsseitig mit einer umlaufenden Rastnase 164 zur Festlegung des Fixierelements 148 im zweiten, zylindergehäusefesten Positionsbereich 156 versehen ist.

Das gemäß Fig. 17 einen im wesentlichen U-förmigen Querschnitt aufweisende Sicherungselement 32 hingegen hat beim dritten Ausführungsbeispiel einen inneren, in die Gehäusebohrung 14 des Zylindergehäuses 12 hineinragenden Ringabschnitt 166. Am Außenumfang des inneren Ringabschnitts 166 sind - in Fig. 17 von links nach rechts gesehen - eine zylindrische Zentrierfläche 168 für das Fixierelement 148 in dessen erster Position, eine ebene, ringförmige Widerlagerfläche 170 für das Fixierelement 148 in dessen erster Position, eine Fügeschräge 172 für das Fixierelement 148 bei dessen Verlagerung in den zweiten, zylindergehäusefesten Positionsbereich 156, die zur Mittelachse etwas steiler geneigt ist als die Schräge 160 am Fixierelement 148, sowie ein Hinterschnitt 174 zur formschlüssigen Festlegung des Fixierelements 148 im zweiten, zylindergehäusefesten Positionsbereich 156 ausgebildet.

Vor der ersten Betätigung des Nehmerzylinders 10 gemäß dem dritten Ausführungsbeispiel wird die Kolbenstange 18 mittels des Fixierelements 148, deren Ringabschnitt 152 formschlüssig in die Radialnut 150 an der Kolbenstange 18 eingreift, in einer vorbestimmten Hubstellung bezüglich des Zylindergehäuses 12 gefesselt. Dabei wird das Fixierelement 148 mit seinem Befestigungsabschnitt 162, genauer dessen vom Kolben 16 abgewandter Stirnfläche infolge der von der Vorspannfeder 56 auf den Kolben 16 ausgeübten Vorspannkraft gegen die Widerlagerfläche 170 am Sicherungselement 32 gedrückt. Zugleich wird die Kolbenstange 18 über das Fixierelement 148, deren Rastnase 164 an der Zentrierfläche 168 des Sicherungselements 32 anliegt, in einer zur Mittelachse der Gehäusebohrung 14 des Zylindergehäuses 12 ausgefluchteten Lage gehalten.

Bei der ersten Betätigung des Nehmerzylinders 10 wird der Kolben 16 auch hydraulisch mit einer Kraft beaufschlagt, die bestrebt ist, den Kolben 16 in Fig. 13 nach rechts zu bewegen. Infolgedessen bewegt sich der Ringabschnitt 152 des geschlitzten Fixierelements 148 unter einer radialen Aufweitung desselben geringfügig aus der Radialnut 150 in der Kolbenstange 18 heraus. Dabei springt die Rastnase 164 des Fixierelements 148 von der Zentrierfläche 168 des Sicherungselements 32 auf dessen Fügeschräge 172.

Nun kann sich die Kolbenstange 18 relativ zum Zylindergehäuse 12 bewegen und nimmt dabei das Fixierelement 148 nach rechts in Fig. 13 mit. Hierbei wird das geschlitzte Fixierelement 148 unter Anlage der Rastnase 164 an der Fügeschräge 172 des Sicherungselements 32 kontinuierlich aufgeweitet bis die Rastnase 164 des Fixierelements 148 mit dem Hinterschnitt 174 am Sicherungselement 32 verrastet bzw. in diesen einschnappt. Beim Rücklauf des Kolbens 16 gegen Ende der ersten Betätigung des Nehmerzylinders 10 sowie bei weiteren Betätigungen des Nehmerzylinders 10 ist das Fixierelement 148 nunmehr formschlüssig am Sicherungselement 32 gehalten, so daß die Kolbenstange 18 entsperrt und in axialer Richtung frei beweglich ist. Dieser Zustand ist in Fig. 14 gezeigt.

Obgleich in den dargestellten Ausführungsbeispielen die Kolbenstange 18 durchweg einstückig mit dem Kolben 16 ausgebildet ist, ist für den Fachmann ersichtlich, daß die oben beschriebene lösbare Fesselung der Kolbenstange 18 gegenüber dem Zylindergehäuse 12 mittels des Fixierelements 20, 126 bzw. 148 selbstverständlich auch bei Kolbenstangen zum Einsatz kommen kann, die lose in eine zugeordnete Aussparung im Kolben eingreifen oder aber formschlüssig, etwa mittels eines Kugelgelenks mit dem Kolben verbunden sind.

Die oben beschriebenen Nehmerzylinder 10 können sowohl in vorbefüllten als auch in nicht-vorbefüllten hydraulischen Kupplungsbetätigungen zum Einsatz kommen, wobei sie in beiden Fällen die Montage des Nehmerzylinders 10 im Kraftfahrzeug insbesondere insofern vereinfachen, als dabei infolge des die Kolbenstange 18 gegenüber dem Zylindergehäuse 12 in konstruktiv vorbestimmter Stellung fesselnden Fixierelements 20, 126 oder 148 zum einen die Kolbenstange 18 nicht gegen die Kraft der Vorspannfeder 56 des Nehmerzylinders 10 in axialer Richtung in das Zylindergehäuse 12 hinein verschoben werden muß und zum anderen die Kolbenstange 18 auch in einer festen Winkellage bezüglich der Mittelachse der Gehäusebohrung 14 gehalten ist, so daß die Kolbenstange 18 hier nicht umständlich von Hand ausgerichtet werden muß. Auch nach der ersten Betätigung des Nehmerzylinders 10 bleibt das Fixierelement 20, 126 bzw. 148 ein integraler Bestandteil des Nehmerzylinders 10, der das vom Kolben 16 abgewandte Betätigungsende der Kolbenstange 18 stets unberührt läßt.

Es wird ein Hydraulikzylinder offenbart, umfassend ein eine Gehäusebohrung aufweisendes Zylindergehäuse, einen in der Gehäusebohrung längsverschieblich aufgenommenen Kolben, eine dem Kolben zugeordnete Kolbenstange und ein Fixierelement, das vor einer Zylindererstbetätigung lösbar mit der Kolbenstange verbunden ist und diese bezüglich des Zylindergehäuses in einer vorbestimmten Hubstellung fixiert und das dazu ausgebildet ist, mit der Zylindererstbetätigung die Kolbenstange gegenüber dem Zylindergehäuse freizugeben. Erfindungsgemäß ist das Fixierelement vor der Zylindererstbetätigung in einer ersten Position mit einem mittleren Bereich der Kolbenstange lösbar verbunden und mit der Zylindererstbetätigung von der ersten Position in einen zweiten, insbesondere kolbenstangenfesten Positionsbereich verlagerbar, in dem es für weitere Zylinderbetätigungen festlegbar ist. Im Ergebnis wird ein einfach ausgebildeter Hydraulikzylinder geschaffen, bei dem das zur temporären Fesselung der Kolbenstange vorgesehene Fixierelement insbesondere das vom Kolben abgewandte Ende der Kolbenstange unberührt läßt und auch den Betrieb des Hydraulikzylinders nicht weiter behindert.

### Bezugszeichenliste

- 10: Nehmerzylinder
- 12: Zylindergehäuse
- 14: Gehäusebohrung
- 16: Kolben
- 18: Kolbenstange
- 20: Fixierelement
- 22: mittlerer Bereich
- 24: zweiter, kolbenstangenfester Positionsbereich
- 26: Befestigungsflansch
- 28: Befestigungsbohrung
- 30: ringförmige Ausnehmung
- 32: Sicherungselement
- 34: Nase
- 36: Aussparung
- 38: Radialnut
- 40: Befestigungsabschnitt
- 42: Faltenbalg
- 44: konische Fügeschräge
- 46: zylindrischer Abschnitt
- 48: Bodenwand
- 50: Dichtelement
- 52: Druckanschluß
- 54: Druckkammer
- 56: Vorspannfeder
- 58: Zentrierelement
- 60: Federtellerabschnitt
- 62: Axialnut
- 64: ringförmiger Zentrieransatz
- 66: hohlzylindrischer Befestigungsabschnitt
- 68: zentrale Aussparung
- 70: Außenfläche
- 72: Kugelkopf
- 74: Kugelkalottenabschnitt
- 76: Staubschutzkappe
- 78: Radialnut
- 80: Befestigungsabschnitt
- 82: Bund
- 84: Bund
- 86: Kern
- 88: Profilsteg
- 90: Außenfläche
- 92: Zylinderabschnitt
- 94: Schräge
- 96: Sitzabschnitt
- 98: Außenring
- 100: Verbindungssteg
- 102: Sollbruchstelle
- 104: Rastnase
- 106: Widerlagerfläche
- 108: Bundabschnitt
- 110: Zentrierfläche
- 112: Stufenbohrung
- 114: Gehäusegrundkörper
- 116: Laufbüchse
- 118: Radialnut
- 120: O-Ring
- 122: Ringbund
- 124: Widerlagerfläche
- 126: Fixierelement
- 128: Radialnut
- 130: Radialnut
- 132: Tragring
- 134: Längsschlitz
- 136: Außenring
- 138: Verbindungssteg
- 140: Sollbruchstelle
- 142: Ringabschnitt
- 144: Vorsprung
- 146: Profil
- 148: Fixierelement
- 150: Radialnut
- 152: Ringabschnitt
- 154: Schlitz
- 156: zweiter, zylindergehäusefester Positionsbereich
- 158: Mantelabschnitt
- 160: Schräge
- 162: Befestigungsabschnitt
- 164: Rastnase
- 166: innerer Ringabschnitt
- 168: Zentrierfläche
- 170: Widerlagerfläche
- 172: Fügeschräge
- 174: Hinterschnitt

## Patentansprüche

1. Hydraulikzylinder (10), insbesondere Nehmerzylinder für eine hydraulische Kupplungsbetätigung für Kraftfahrzeuge, mit einem eine Gehäusebohrung (14) aufweisenden Zylindergehäuse (12), einem in der Gehäusebohrung (14) längsverschieblich aufgenommenen Kolben (16), einer dem Kolben (16) zugeordneten Kolbenstange (18) und einem Fixierelement (20, 126, 148), das vor einer ersten Betätigung des Hydraulikzylinders (10) lösbar mit der Kolbenstange (18) verbunden ist und diese bezüglich des Zylindergehäuses (12) in einer vorbestimmten Hubstellung fixiert und das dazu ausgebildet ist, mit der ersten Betätigung des Hydraulikzylinders (10) die Kolbenstange (18) gegenüber dem Zylindergehäuse (12) freizugeben, **dadurch gekennzeichnet, daß** das Fixierelement (20, 126, 148) vor der ersten Betätigung des Hydraulikzylinders (10) in einer ersten Position mit einem mittleren Bereich (22) der Kolbenstange (18) lösbar verbunden ist und mit der ersten Betätigung des Hydraulikzylinders (10) von der ersten Position in einen zweiten, kolbenstangen- oder zylindergehäusefesten Positionsbereich (24, 156) verlagerbar ist, in dem es für weitere Betätigungen des Hydraulikzylinders (10) festlegbar ist.

2. Hydraulikzylinder (10) nach Anspruch 1, **dadurch gekennzeichnet, daß** das Fixierelement (20) einstückig mit der Kolbenstange (18) ausgebildet ist.

3. Hydraulikzylinder (10) nach Anspruch 1, **dadurch gekennzeichnet, daß** das Fixierelement (126, 148) ein von der Kolbenstange (18) separates Teil ist.

4. Hydraulikzylinder (10) nach einem der vorhergehenden Ansprüche, **dadurch gekennzeichnet, daß** das Fixierelement (20, 126, 148) ringförmig ist und die Kolbenstange (18) umgibt.

5. Hydraulikzylinder (10) nach Anspruch 1, **dadurch gekennzeichnet, daß** die lösbare Verbindung zwischen dem Fixierelement (20, 126) und der Kolbenstange (18) insbesondere stoffschlüssig über mindestens eine Sollbruchstelle (102, 140) zwischen dem Fixierelement (20, 126) und der Kolbenstange (18) oder einem das Fixierelement (126) in der ersten Position an der Kolbenstange (18) haltenden Träger (132) hergestellt ist.

6. Hydraulikzylinder (10) nach Anspruch 5, **dadurch gekennzeichnet, daß** das Fixierelement (20, 126) einen Außenring (98, 136) und eine Mehrzahl von sich vom Außenring (98, 136) nach radial innen erstreckenden Verbindungsstegen (100, 138) aufweist, die vor der ersten Betätigung des Hydraulikzylinders (10) jeweils über eine Sollbruchstelle (102, 140) einteilig mit der Kolbenstange (18) oder einem innerhalb des Außenrings (136) vorgesehenen Tragring (132) als Träger verbunden sind, der in der ersten Position auf einem Sitz (128) an der Kolbenstange (18) angeordnet ist.

7. Hydraulikzylinder (10) nach Anspruch 6, **dadurch gekennzeichnet, daß** der Tragring (132) konzentrisch innerhalb des Außenrings (136) angeordnet ist.

8. Hydraulikzylinder (10) nach Anspruch 6 oder 7, **dadurch gekennzeichnet, daß** die Sollbruchstellen (102, 140) jeweils durch eine Querschnittsverjüngung des jeweiligen Verbindungsstegs (100, 138) zwischen dem Außenring (98, 136) und der Kolbenstange (18) oder dem Tragring (132) als Träger ausgebildet sind.

9. Hydraulikzylinder (10) nach Anspruch 1, **dadurch gekennzeichnet, daß** die lösbare Verbindung zwischen dem Fixierelement (148) und der Kolbenstange (18) formschlüssig mittels komplementär ineinandergreifender Strukturen (150, 152) am Fixierelement (148) und an der Kolbenstange (18) hergestellt ist, wobei das Fixierelement (148) und/oder die Kolbenstange (18) federnd ausgebildet ist, so daß bei Aufbringung einer Kraft, die in Achsrichtung der Kolbenstange (18) wirkt und eine vorbestimmte Kraft überschreitet, die Strukturen (150, 152) unter einer radialen Ausweichbewegung von Fixierelement (148) und/oder Kolbenstange (18) außer Eingriff kommen.

10. Hydraulikzylinder (10) nach Anspruch 9, **dadurch gekennzeichnet, daß** die Kolbenstange (18) in ihrem mittleren Bereich (22) mit einer Radialnut (150) versehen ist, die einen halbrunden Querschnitt aufweist und in die vor der ersten Betätigung des Hydraulikzylinders (10) ein komplementär geformter Ringabschnitt (152) des Fixierelements (148) formschlüssig eingreift, wobei das Fixierelement (148) einen in Längsrichtung durchgehenden Schlitz (154) hat, um nach radial außen auffedern zu können.

11. Hydraulikzylinder (10) nach einem der vorhergehenden Ansprüche, **dadurch gekennzeichnet, daß** das Fixierelement (20, 126, 148) in seiner ersten Position an einer Widerlagerfläche (106, 124, 170) anliegt, die an einem von der Kolbenstange (18) durchgriffenen, offenen Ende der Gehäusebohrung (14) an einem Ringbund (122) des Zylindergehäuses (12) oder einem dort angebrachten Einsatzteil (32) ausgebildet ist.

12. Hydraulikzylinder (10) nach Anspruch 1, **dadurch gekennzeichnet, daß** sich der zweite, kolbenstangenfeste Positionsbereich (24) für das Fixierelement (20, 126) zwischen dessen erster Position an der Kolbenstange (18) und dem Kolben (16) nahe dem Kolben (16) befindet.

13. Hydraulikzylinder (10) nach Anspruch 1, **dadurch gekennzeichnet, daß** sich der zweite, zylindergehäusefeste Positionsbereich (156) für das Fixierelement (148) an einem von der Kolbenstange (18) durchgriffenen, offenen Ende der Gehäusebohrung (14) im Zylindergehäuse (12) befindet.

14. Hydraulikzylinder (10) nach Anspruch 1, **dadurch gekennzeichnet, daß** im zweiten, kolbenstangen- oder zylindergehäusefesten Positionsbereich (24, 156) für das Fixierelement (20, 126, 148) eine Struktur (104, 130, 174) ausgebildet ist, mit der eine ggf. dazu komplementär geformte Struktur (100, 136, 164) am Fixierelement (20, 126, 148) formschlüssig in Eingriff bringbar ist, um das Fixierelement (20, 126, 148) für weitere Betätigungen des Hydraulikzylinders (10) festzulegen.

15. Hydraulikzylinder (10) nach Anspruch 14, **dadurch gekennzeichnet, daß** im zweiten, kolbenstangenfesten Positionsbereich (24) für das Fixierelement (20) eine Mehrzahl von Rastnasen (104) vorgesehen ist, mit denen sich von einem Außenring (98) des Fixierelements (20) nach radial innen erstreckende Verbindungsstege (100) des Fixierelements (20) verrastbar sind, welche hierfür in axialer Richtung des Fixierelements (20) federnd ausgebildet sind.

16. Hydraulikzylinder (10) nach Anspruch 14, **dadurch gekennzeichnet, daß** die Kolbenstange (18) im zweiten, kolbenstangenfesten Positionsbereich (24) für das Fixierelement (126) mit einer umlaufenden Radialnut (130) versehen ist, in die das Fixierelement (126) einschnappbar ist, wozu das Fixierelement (126) mit einem in dessen Längsrichtung durchgehenden Schlitz (134) versehen ist, während die Kolbenstange (18) wenigstens eine zum zweiten, kolbenstangenfesten Positionsbereich (24) hin ansteigende Schräge (94) aufweist, mittels der das Fixierelement (126) bei der ersten Betätigung des Hydraulikzylinders (10) zur Herstellung der Schnappverbindung radial auffederbar ist.

17. Hydraulikzylinder (10) nach Anspruch 14, **dadurch gekennzeichnet, daß** das Zylindergehäuse (12) an einem von der Kolbenstange (18) durchgriffenen, offenen Ende der Gehäusebohrung (14) oder ein dort angebrachtes Einsatzteil (32) im zweiten, zylindergehäusefesten Positionsbereich (156) für das Fixierelement (148) mit einem Hinterschnitt (174) versehen ist, in den eine am Fixierelement (148) ausgebildete Rastnase (164) einschnappbar ist, wobei das Fixierelement (148) mit einem in dessen Längsrichtung durchgehenden Schlitz (154) versehen ist, während zylindergehäuseseitig eine zum zweiten, zylindergehäusefesten Positionsbereich (156) hin ansteigende Fügeschräge (172) vorgesehen ist, über die das Fixierelement (148) bei der ersten Betätigung des Hydraulikzylinders (10) zur Herstellung der Schnappverbindung radial auffederbar ist.

18. Hydraulikzylinder (10) nach einem der vorhergehenden Ansprüche, **dadurch gekennzeichnet, daß** das Fixierelement (20, 126, 148) in seiner zweiten, kolbenstangen- oder zylindergehäusefesten Position als Anschlagelement dient, welches mit einem zylindergehäuse- bzw. kolbenstangenfesten Gegenanschlag (106, 170) zusammenwirkt, um den Hub des Kolbens (16) in der Gehäusebohrung (14) des Zylindergehäuses (12) zu begrenzen.

19. Hydraulikzylinder (10) nach einem der vorhergehenden Ansprüche, **dadurch gekennzeichnet, daß** das Fixierelement (20, 126, 148) aus Kunststoff besteht, insbesondere daraus spritzgegossen ist.

## Claims

1. Hydraulic cylinder (10), in particular slave cylinder for a hydraulic clutch control for motor vehicles, with a cylinder housing (12) having a housing bore (14), a piston (16) accommodated longitudinally displaceably in the housing bore (14), a piston rod (18) allocated to the piston (16) and a fixing element (20, 126, 148) which before first operation of the hydraulic cylinder (10) is detachably connected with the piston rod (18) and fixes this in a predetermined stroke position in relation to the cylinder housing (12) and which is designed, on first operation of the hydraulic cylinder (10), to release the piston rod (18) in relation to the cylinder housing (12), **characterized in that** the fixing element (20, 126, 148) before first operation of the hydraulic cylinder (10) in a first position is detachably connected with a center area (22) of the piston rod (18) and on first operation of the hydraulic cylinder (10) can be moved from the first position into a second position area (24, 156) stationary in relation to the piston rod or the cylinder housing, in which position area it can be fixed for further operations of the hydraulic cylinder (10).

2. Hydraulic cylinder (10) according to claim 1, **characterized in that** the fixing element (20) is formed of one piece with the piston rod (18).

3. Hydraulic cylinder (10) according to claim 1, **characterized in that** the fixing element (126, 148) is a component separate from the piston rod (18).

4. Hydraulic cylinder (10) according to one of the preceding claims, **characterized in that** the fixing element (20, 126, 148) is annular and surrounds the piston rod (18).

5. Hydraulic cylinder (10) according to claim 1, **characterized in that** the detachable connection between the fixing element (20, 126) and the piston rod (18) is created in particular by material fit via at least one breaking point (102, 140) between the fixing element (20, 126) and the piston rod (18) or a carrier (132) holding the fixing element (126) in the first position on the piston rod (18).

6. Hydraulic cylinder (10) according to claim 5, **characterized in that** the fixing element (20, 126) has an outer ring (98, 136) and a plurality of connecting webs (100, 138) extending radially inwards from the outer ring (98, 136) which before first operation of the hydraulic cylinder (10) are each connected as one piece via a breaking point (102, 140) with the piston rod (18) or a carrier ring (132) provided within the outer ring (136) as carrier, which in the first position is arranged on a seat (128) on the piston rod (18).

7. Hydraulic cylinder (10) according to claim 6, **characterized in that** the carrier ring (132) is arranged concentric within the outer ring (136).

8. Hydraulic cylinder (10) according to claim 6 or 7, **characterized in that** the breaking points (102, 140) are each formed by a cross section reduction of the connecting web (100, 138) concerned between the outer ring (98, 136) and the piston rod (18) or the carrier ring (132) as carrier.

9. Hydraulic cylinder (10) according to claim 1, **characterized in that** the detachable connection between the fixing element (148) and the piston rod (18) is created by form fit by means of complementary intermeshing structures (150, 152) on the fixing element (148) and on the piston rod (18), wherein the fixing element (148) and/or the piston rod (18) is formed resilient so that on application of a force acting in the axial direction of the piston rod (18) and exceeding a predetermined force, the structures (150, 152) move out of engagement under a radial deflection movement of the fixing element (148) and/or the piston rod (18).

10. Hydraulic cylinder (10) according to claim 9, **characterized in that** the piston rod (18) in its center area (22) is fitted with a radial groove (150) which has a semi-circular cross section and in which before the first operation of the hydraulic cylinder (10) there engages by form fit a complementary-shaped ring section (152) of the fixing element (148), the fixing element (148) having a through slot (154) in the longitudinal direction in order to be able to spring resiliently radially outwards.

11. Hydraulic cylinder (10) according to one of the preceding claims, **characterized in that** the fixing element (20, 126, 148) in its first position lies on an abutment surface (106, 124, 170) which is formed at an open end of the housing bore (14) through which the piston rod (18) extends, on a ring collar (122) of the cylinder housing (12) or an insert (32) attached there.

12. Hydraulic cylinder (10) according to claim 1, **characterized in that** the second position area (24) stationary in relation to the piston rod for the fixing element (20, 126) lies close to the piston (16) between the first position of the fixing element on the piston rod (18) and the piston (16).

13. Hydraulic cylinder (10) according to claim 1, **characterized in that** the second position area (156) stationary in relation to the cylinder housing for the fixing element (148) lies at an open end of the housing bore (14) in the cylinder housing (12) through which the piston rod (18) extends.

14. Hydraulic cylinder (10) according to claim 1, **characterized in that** in the second position area (24, 156) for the fixing element (20, 126, 148) stationary in relation to the piston rod or cylinder housing is formed a structure (104, 130, 174) with which a complementary-shaped structure (100, 136, 164) on the fixing element (20, 126, 148) can be brought into form fit engagement in order to fix the fixing element (20, 126, 148) for further operations of the hydraulic cylinder (10).

15. Hydraulic cylinder (10) according to claim 14, **characterized in that** in the second position area (24) for the fixing element (20) stationary in relation to the piston rod, a plurality of locking tabs (104) is provided with which can engage connecting webs (100) of the fixing element (20) which extend radially inwards from an outer ring (98) of the fixing element (20) and which are formed resilient in the axial direction of the fixing element (20).

16. Hydraulic cylinder according to claim 14, **characterized in that** the piston rod (18) in the second position area (24) for the fixing element (126) stationary in relation to the piston rod, is fitted with a peripheral radial groove (130) in which can be snap-locked the fixing element (126), for which the fixing element (126) is fitted with a through slot (134) in its longitudinal direction while the piston rod (18) has at least one slope (94) rising towards the second position area (24) stationary in relation to the piston rod, by means of which slope the fixing element (126) on first operation of the hydraulic cylinder (10) can spring radially to create the snap-lock connection.

17. Hydraulic cylinder (10) according to claim 14, **characterized in that** the cylinder housing (12) at an open end of the housing bore (14) through which the piston rod (18) extends or an insert (32) attached there, in the second position area (156) for the fixing element (148) stationary in relation to the cylinder housing, is fitted with an undercut (174) in which can be snap-locked a locking tab (164) formed on the fixing element (148), wherein the fixing element (148) is fitted with a through slot (154) in its longitudinal direction while on the cylinder housing side is provided a joint slope (172) rising towards the second position area (156) stationary in relation to the cylinder housing, via which slope the fixing element (148) on first operation of the hydraulic cylinder (10) can spring radially to create the snap-lock connection.

18. Hydraulic cylinder (10) according to one of the preceding claims, **characterized in that** the fixing element (20, 126, 148) in its second position stationary in relation to the piston rod or cylinder housing serves as a stop element which co-operates with a counterstop (106, 170) stationary in relation to the cylinder housing and piston rod respectively in order to limit the stroke of the piston (16) in the housing bore (14) of the cylinder housing (12).

19. Hydraulic cylinder (10) according to one of the preceding claims, **characterized in that** the fixing element (20, 126, 148) consists of plastic, in particular is injection molded therefrom.

## Revendications

1. Vérin ou cylindre hydraulique (10), notamment vérin ou cylindre récepteur pour un actionnement hydraulique d'embrayage de véhicule automobile, comprenant un carter de vérin (12) qui présente un alésage de carter (14), un piston (16) reçu en coulissement longitudinal dans l'alésage de carter (14), une tige de piston (18) associée au piston (16), et un élément de fixation (20, 126, 148) qui, avant un premier actionnement du vérin hydraulique (10) est relié de manière amovible à la tige de piston (18) et fixe celle-ci dans une position de course prédéterminée par rapport au carter de vérin (12), et est réalisé de façon à libérer la tige de piston (18) par rapport au carter de vérin (12) avec le premier actionnement du vérin hydraulique (10), **caractérisé en ce que** l'élément de fixation (20, 126, 148), avant le premier actionnement du vérin hydraulique (10), est relié de manière amovible, dans une première position, à une zone centrale (22) de la tige de piston (18), et peut, avec le premier actionnement du vérin hydraulique (10), être déplacé de la première position dans une deuxième zone de position (24, 156) fixe avec la tige de piston ou avec le carter de vérin, dans laquelle il peut être immobilisé et fixé pour d'autres actionnements suivants du vérin hydraulique (10).

2. Vérin hydraulique (10) selon la revendication 1, **caractérisé en ce que** l'élément de fixation (20) est réalisé d'un seul tenant avec la tige de piston (18).

3. Vérin hydraulique (10) selon la revendication 1, **caractérisé en ce que** l'élément de fixation (126, 148) est une pièce séparée de la tige de piston (18).

4. Vérin hydraulique (10) selon l'une des revendications précédentes, **caractérisé en ce que** l'élément de fixation (20, 126, 148) est de forme annulaire et entoure la tige de piston (18).

5. Vérin hydraulique (10) selon la revendication 1, **caractérisé en ce que** la liaison amovible entre l'élément de fixation (20, 126) et la tige de piston (18) est établie notamment par continuité de matière, par l'intermédiaire d'au moins une zone de rupture programmée (102, 140) entre l'élément de fixation (20, 126) et la tige de piston (18), ou un support (132) qui maintient l'élément de fixation (126) dans la première position sur la tige de piston (18).

6. Vérin hydraulique (10) selon la revendication 5, **caractérisé en ce que** l'élément de fixation (20, 126) comprend un anneau extérieur (98, 136) et plusieurs nervures de liaison (100, 138) qui s'étendent radialement vers l'intérieur à partir de l'anneau extérieur (98, 136), et qui avant le premier actionnement du vérin hydraulique (10), sont reliées, respectivement par l'intermédiaire d'une zone de rupture programmée (102, 140), d'un seul tenant avec la tige de piston (18) ou avec un anneau de support (132) en tant que support, qui est prévu à l'intérieur de l'anneau extérieur (136) et est disposé, dans la première position, sur une portée (128) de la tige de piston (18).

7. Vérin hydraulique (10) selon la revendication 6, **caractérisé en ce que** l'anneau de support (132) est agencé concentriquement à l'intérieur de l'anneau extérieur (136).

8. Vérin hydraulique (10) selon la revendication 6 ou 7, **caractérisé en ce que** les zones de rupture programmée (102, 140) sont respectivement formées par un rétrécissement de section transversale de la nervure de liaison respective (100, 138) entre l'anneau extérieur (98, 136) et la tige de piston (18) ou l'anneau de support (132) en tant que support.

9. Vérin hydraulique (10) selon la revendication 1, **caractérisé en ce que** la liaison amovible entre l'élément de fixation (148) et la tige de piston (18) est établie par complémentarité de formes au moyen de structures (150, 152) sur l'élément de fixation (148) et la tige de piston (18), qui s'engagent de manière complémentaire les unes dans les autres, l'élément de fixation (148) et/ou la tige de piston (18) étant de configuration élastique de façon telle que lors de l'application d'une force, qui agit dans la direction de l'axe de la tige de piston (18) et dépasse une force prédéterminée, les structures (150, 152) se mettent hors de prise réciproque sous l'effet d'un mouvement d'esquive radiale de l'élément de fixation (148) et/ou de la tige de piston (18).

10. Vérin hydraulique (10) selon la revendication 9, **caractérisé en ce que** la tige de piston (18) est pourvue dans sa zone centrale (22), d'une rainure radiale (150) qui présente une section transversale demi-ronde et dans laquelle s'engage par complémentarité de formes, avant le premier actionnement du vérin hydraulique (10), un tronçon d'anneau (152) de forme complémentaire de l'élément de fixation (148), l'élément de fixation (148) possédant une fente (154) continue dans la direction longitudinale, en vue de pouvoir s'ouvrir radialement vers l'extérieur de manière élastique.

11. Vérin hydraulique (10) selon l'une des revendications précédentes, **caractérisé en ce que** l'élément de fixation (20, 126, 148), dans sa première position, s'appuie sur une surface de butée (106, 124, 170) qui est formée au niveau d'une extrémité ouverte de l'alésage de carter (14), traversée par la tige de piston (18), sur un collet ou épaulement annulaire (122) du carter de vérin (12) ou sur une pièce d'insert (32) rapportée à cet endroit.

12. Vérin hydraulique (10) selon la revendication 1, **caractérisé en ce que** la deuxième zone de position (24) fixe avec la tige de piston, pour l'élément de fixation (20, 126), se trouve entre la première position de ce dernier sur la tige de piston (18) et le piston (16), à proximité du piston (16).

13. Vérin hydraulique (10) selon la revendication 1, **caractérisé en ce que** la deuxième zone de position (156) fixe avec le carter de vérin, pour l'élément de fixation (148), se trouve au niveau d'une extrémité ouverte de l'alésage de carter (14) dans le carter de vérin (12), traversée par la tige de piston (18).

14. Vérin hydraulique (10) selon la revendication 1, **caractérisé en ce que** dans la deuxième zone de position (24, 156), fixe avec la tige de piston ou avec le carter de vérin, pour l'élément de fixation (20, 126, 148), est formée une structure (104, 130, 174) avec laquelle peut être amenée en prise par complémentarité de formes, une structure (100, 136, 164), le cas échéant de forme complémentaire, sur l'élément de fixation (20, 126, 148), pour immobiliser et fixer l'élément de fixation (20, 126, 148) pour les actionnements suivants du vérin hydraulique (10).

15. Vérin hydraulique (10) selon la revendication 14, **caractérisé en ce que** dans la deuxième zone de position (24) fixe avec la tige de piston, pour l'élément de fixation (20), sont prévus plusieurs talons d'encliquetage (104) avec lesquels peuvent venir s'encliqueter des nervures de liaison (100) de l'élément de fixation (20), qui s'étendent radialement vers l'intérieur en étant issues d'un anneau extérieur (98) de l'élément de fixation (20), et sont à cet effet, d'une configuration élastique dans la direction axiale de l'élément de fixation (20).

16. Vérin hydraulique (10) selon la revendication 14, **caractérisé en ce que** la tige de piston (18) est pourvue, dans la deuxième zone de position (24) fixe avec la tige de piston, pour l'élément de fixation (126), d'une rainure radiale (130) périphérique, dans laquelle peut s'enclencher l'élément de fixation (126), ce pour quoi l'élément de fixation (126) est pourvu d'une fente (134) continue dans la direction longitudinale de l'élément de fixation, tandis que la tige de piston (18) présente au moins une rampe (94) qui est montante en direction de la deuxième zone de position (24) fixe avec la tige de piston, et au moyen de laquelle l'élément de fixation (126) peut, lors du premier actionnement du vérin hydraulique (10), être évasé radialement, de manière élastique, pour établir la liaison par enclenchement.

17. Vérin hydraulique (10) selon la revendication 14, **caractérisé en ce que** le carter de vérin (12) est pourvu, au niveau d'une extrémité ouverte de l'alésage de carter (14), traversée par la tige de piston (18), ou d'une pièce d'insert (32) rapportée à cet endroit, dans la deuxième zone de position (156) fixe avec le carter de vérin, pour l'élément de fixation (148), d'une contre-dépouille (174) dans laquelle peut venir s'enclencher un talon d'encliquetage (164) réalisé sur l'élément de fixation (148), l'élément de fixation (148) étant pourvu d'une fente (154) continue dans la direction longitudinale de l'élément de fixation, tandis que, côté carter de vérin, est prévue une rampe d'assemblage (172) qui est montante en direction de la deuxième zone de position (156) fixe avec le carter de vérin, et par l'intermédiaire de laquelle l'élément de fixation (148) peut, lors du premier actionnement du vérin hydraulique (10), être évasé radialement, de manière élastique, pour établir la liaison par enclenchement.

18. Vérin hydraulique (10) selon l'une des revendications précédentes, **caractérisé en ce que** l'élément de fixation (20, 126, 148), dans sa deuxième position fixe avec la tige de piston ou avec le carter de vérin, sert d'élément de butée qui interagit avec une butée conjuguée (106, 170) fixe avec le carter de vérin ou respectivement la tige de piston, pour limiter la course du piston (16) dans l'alésage de carter (14) du carter de vérin (12).

19. Vérin hydraulique (10) selon l'une des revendications précédentes, **caractérisé en ce que** l'élément de fixation (20, 126, 148) est réalisé en matière plastique, notamment moulé par injection de cette matière plastique.
